(19) Europäisches Patentamt
European Patent Office
Office européen des brevets

(11) EP 4 613 486 A1

(12) **EUROPEAN PATENT APPLICATION**
published in accordance with Art. 153(4) EPC

(43) Date of publication:
**10.09.2025 Bulletin 2025/37**

(21) Application number: **23885424.4**

(22) Date of filing: **02.10.2023**

(51) International Patent Classification (IPC):
***B41J 2/01*** *(2006.01)* ***B41M 5/00*** *(2006.01)*
***C09D 11/30*** *(2014.01)*

(52) Cooperative Patent Classification (CPC):
**B41J 2/01; B41M 5/00; C09D 11/30**

(86) International application number:
**PCT/JP2023/035959**

(87) International publication number:
**WO 2024/095661 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022 JP 2022175010**

(71) Applicant: **FUJIFILM Corporation**
**Tokyo 106-8620 (JP)**

(72) Inventors:
- **SUZUKI, Shota**
**Ashigarakami-gun, Kanagawa 258-8577 (JP)**
- **TAKESHITA, Kohei**
**Ashigarakami-gun, Kanagawa 258-8577 (JP)**

(74) Representative: **Klunker IP Patentanwälte PartG mbB**
**Destouchesstraße 68**
**80796 München (DE)**

(54) **INKJET RECORDING DEVICE AND INKJET RECORDING METHOD**

(57) Provided are an ink jet recording apparatus including an ink jet head having a nozzle for jetting, onto a base material, an ink that contains water and particles which contain a polymer P having an acid group and a polymerizable compound A, a scanning unit which is configured to cause the ink jet head to perform scanning in a scanning direction, a transport unit which is configured to transport the base material in a transport direction intersecting the scanning direction, a heating unit which is configured to heat a surface of the base material opposite to a surface on which the ink is to be landed, and a light source which is configured to, after the ink jetted from the nozzle is landed on the base material, irradiate the surface of the base material on which the ink is landed with an active energy ray, in which a distance along the transport direction between an end part of the nozzle on a downstream side in the transport direction and an end part of the light source on an upstream side in the transport direction is 10 mm to 200 mm; and applications thereof.

FIG. 1

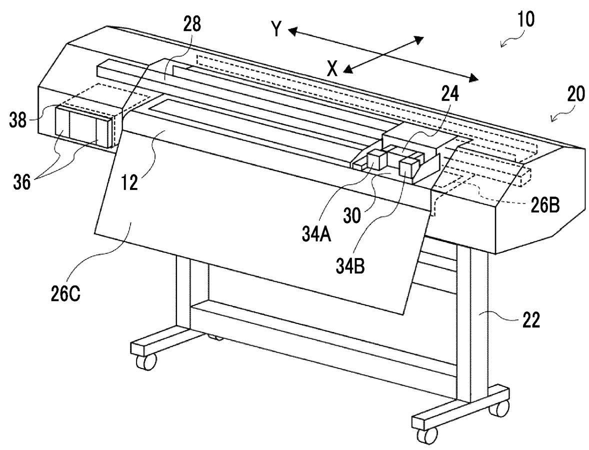


EP 4 613 486 A1

## Description

### BACKGROUND OF THE INVENTION

1. Field of the Invention

The present disclosure relates to an ink jet recording apparatus and an ink jet recording method.

2. Description of the Related Art

In the related art, various studies have been conducted on an ink jet recording apparatus and an ink jet recording method.

For example, JP6584677B discloses an ink jet ink composition containing water, a chain-like polymer which includes a specific structural unit (1), a specific structural unit (2), and a hydrophilic group, and particles including a polymerizable group.

JP2013-78862A discloses an ink jet recording apparatus including an ink jet head having a plurality of nozzles which jet an ink cured by irradiation with an actinic ray, a recording medium transport unit which transports a recording medium to which ink droplets jetted from the ink jet head adhere, a scanning unit which moves the ink jet head relative to the recording medium, a temporary curing unit which moves together with the scanning unit and irradiates the ink droplets adhering to the recording medium with an actinic ray to an extent that the ink droplets are incompletely cured, and a main curing unit which is provided separately from the temporary curing unit and irradiates the ink droplets exposed by the temporary curing unit with an actinic ray to perform main curing on the ink droplets.

### SUMMARY OF THE INVENTION

However, in the related art, it has been difficult to achieve all of image quality, rub resistance, stretchability of an image in an image recorded material obtained by an ink jet recording system.

The present disclosure has been made in view of such circumstances, and an object to be achieved by an embodiment of the present invention is to provide an ink jet recording apparatus and an ink jet recording method, in which an image having excellent image quality, rub resistance, and stretchability can be recorded.

The present disclosure includes the following aspects.

<1> An ink jet recording apparatus comprising:

an ink jet head having a nozzle for jetting, onto a base material, an ink that contains water and particles which contain a polymer P having an acid group and a polymerizable compound A;
a scanning unit which is configured to cause the ink jet head to perform scanning in a scanning direction;
a transport unit which is configured to transport the base material in a transport direction intersecting the scanning direction;
a heating unit which is configured to heat a surface of the base material opposite to a surface on which the ink is to be landed; and
a light source which is configured to, after the ink jetted from the nozzle is landed on the base material, irradiate the surface of the base material on which the ink is landed with an active energy ray,
in which a distance along the transport direction between an end part of the nozzle on a downstream side in the transport direction and an end part of the light source on an upstream side in the transport direction is 10 mm to 200 mm.

<2> The ink jet recording apparatus according to <1>,
in which the distance is 40 mm to 150 mm.
<3> The ink jet recording apparatus according to <1> or <2>,
in which the heating unit performs heating at a temperature of 35°C to 60°C.
<4> The ink jet recording apparatus according to any one of <1> to <3>, further comprising:
a blower which is configured to blow a gas to the surface of the base material on which the ink is landed.
<5> An ink jet recording method using the ink jet recording apparatus according to any one of <1> to <4> and the ink, the ink jet recording method comprising:

a step of heating a surface of the base material opposite to a surface on which the ink is to be landed;
a step of jetting the ink onto the base material; and

a step of irradiating the surface of the base material on which the ink is landed with an active energy ray.

<6> The ink jet recording method according to <5>,

in which the ink further contains an organic solvent,
a content of water in the ink which has landed on the base material immediately before a timing of the irradiation with an active energy ray is 5% by mass or less with respect to a content of water immediately before a timing when the ink has landed on the base material, and
a content of the organic solvent in the ink which has landed on the base material immediately before the timing of the irradiation with an active energy ray is 30% by mass or more with respect to a content of the organic solvent immediately before the timing when the ink has landed on the base material.

<7> The ink jet recording method according to <5> or <6>,
in which a mass ratio of a content of the polymerizable compound A to a total content of the polymer P having an acid group and the polymerizable compound A is 0.3 to 0.7.

According to the present disclosure, it is possible to provide an ink jet recording apparatus and an ink jet recording method, in which an image having excellent image quality, rub resistance, and stretchability can be recorded.

## BRIEF DESCRIPTION OF THE DRAWINGS

Fig. 1 is an external perspective view of an ink jet recording apparatus according to one embodiment of the present disclosure.
Fig. 2A is an explanatory view schematically showing a base material transport passage of the ink jet recording apparatus shown in Fig. 1.
Fig. 2B is a view for describing a modification example of a blower shown in Fig. 2A.
Fig. 2C is a view for describing a modification example of the blower shown in Fig. 2A.
Fig. 3A is a plan perspective view showing a disposition configuration of an ink jet head and a light source.
Fig. 3B is a plan perspective view showing a disposition configuration of the ink jet head and the light source.
Fig. 4A is a plan perspective view showing a nozzle arrangement of the ink jet head.
Fig. 4B is a plan perspective view showing the nozzle arrangement of the ink jet head.
Fig. 5 is a plan view showing a configuration example of the light source.
Fig. 6 is a perspective view showing a disposition configuration of the ink jet head and the light source.
Fig. 7 is a block diagram showing a main configuration of a control system of the ink jet recording apparatus.
Fig. 8 is a diagram showing a character image used for evaluating accuracy of an image in Examples.

## DESCRIPTION OF THE PREFERRED EMBODIMENTS

In the present disclosure, a numerical range indicated using "to" means a range including numerical values described before and after "to" as a minimum value and a maximum value, respectively.
In the present disclosure, in a case where a plurality of substances corresponding to each component in a composition is present, the amount of each component in the composition means the total amount of the plurality of substances present in the composition, unless otherwise specified.
In a numerical range described in a stepwise manner in the present disclosure, an upper limit value or a lower limit value described in a certain numerical range may be replaced with an upper limit value or a lower limit value in another numerical range described in a stepwise manner, or may be replaced with values shown in Examples.
In the present disclosure, the term "step" includes not only the independent step but also a step in which intended purposes are achieved even in a case where the step cannot be precisely distinguished from other steps.
In the present disclosure, "*" in a chemical formula represents a bonding position.
In the present disclosure, a concept of "image" includes not only a pattern image (for example, a character, a symbol, or a figure) but also a solid image.
In the present disclosure, "light" is a concept including active energy rays such as $\gamma$-rays, $\beta$-rays, electron beams, ultraviolet rays, and visible rays.
In the present disclosure, ultraviolet rays may be referred to as "ultraviolet (UV) light".
In the present disclosure, light generated from a light emitting diode (LED) light source may be referred to as "LED light".

In the present disclosure, "(meth)acrylic acid" has a concept including both acrylic acid and a methacrylic acid, "(meth)acrylate" has a concept including both acrylate and methacrylate, and "(meth)acryloyl group" has a concept including both acryloyl group and methacryloyl group.

Each element in each drawing shown in the present disclosure is not necessarily an accurate scale, the main purpose is to clearly show the principle of the present disclosure, and some parts may be emphasized. In addition, constituent elements indicated by the same reference numeral in each drawing mean the same constituent element.

[Ink jet recording apparatus]

The ink jet recording apparatus according to the present disclosure includes an ink jet head having a nozzle for jetting, onto a base material, an ink that contains water and particles which contain a polymer P having an acid group and a polymerizable compound A, a scanning unit which is configured to cause the ink jet head to perform scanning in a scanning direction, a transport unit which is configured to transport the base material in a transport direction intersecting the scanning direction, a heating unit which is configured to heat a surface of the base material opposite to a surface on which the ink is to be landed, and a light source which is configured to, after the ink jetted from the nozzle is landed on the base material, irradiate the surface of the base material on which the ink is landed with an active energy ray, in which a distance along the transport direction between an end part of the nozzle on a downstream side in the transport direction and an end part of the light source on an upstream side in the transport direction is 10 mm to 200 mm.

By using the ink jet recording apparatus according to the present disclosure, it is possible to record an image having excellent image quality, rub resistance, and stretchability. The reason why such an effect is exhibited is presumed as follows.

In image recording in which an ink jet ink containing water and particles containing a polymer and a polymerizable compound is landed on a base material, and the landed ink is cured by irradiation with active energy rays to obtain an image, it is difficult to achieve all of image quality, rub resistance, and stretchability.

The ink jet recording apparatus according to the present disclosure includes the heating unit which is configured to heat the surface of the base material opposite to the surface on which the ink is landed, and includes the light source which is configured to, after the ink jetted from the nozzle is landed on the base material, irradiate the surface of the base material on which the ink is landed with an active energy ray, in which the ink is cured by the light source after the ink is dried by the heating unit. In particular, since the distance along the transport direction between the end part of the nozzle on the downstream side in the transport direction and the end part of the light source on the upstream side in the transport direction is 10 mm to 200 mm, landing interference between the inks is suppressed by the heating unit. In addition, since the above-described distance is 10 mm to 200 mm, the polymerizable compound A favorably bleeds out from the particles contained in the ink, so that polymerization of the polymerizable compound A is promoted, and the rub resistance and the stretchability are excellent.

On the other hand, JP6584677B discloses particles containing a polymerizable monomer, but does not disclose a specific configuration of an ink jet recording apparatus. JP2013-78862A does not disclose particles containing a polymerizable compound, and the technical ideas are different from those of the present disclosure.

Hereinafter, an example of the ink jet recording apparatus according to the present disclosure will be described with reference to the drawings.

Fig. 1 is an external perspective view of an ink jet recording apparatus 10 according to one embodiment of the present disclosure. The ink jet recording apparatus 10 is an apparatus used for applying an ink onto a base material by an ink jet recording system.

The ink jet recording apparatus 10 includes a apparatus main body 20 and a support leg 22 which supports the apparatus main body 20. The apparatus main body 20 is provided with platen 26A (not shown), 26B, and 26C, a carriage 30 on which an ink jet head 24 and light sources 34A and 34B are mounted, a guide mechanism 28 as a unit (scanning unit) for moving the carriage 30, and a blower 33 (not shown).

In the present disclosure, a direction (Y direction) in which the carriage 30 reciprocates is referred to as "scanning direction".

In the present disclosure, a direction (X direction) in which a base material 12 is transported is referred to as "transport direction".

The scanning direction and the transport direction intersect with each other, and preferably perpendicular to each other.

The guide mechanism 28 is disposed to project along the scanning direction (Y direction) of the carriage 30. The carriage 30 is supported to be reciprocally movable in the scanning direction (Y direction) along the guide mechanism 28.

The ink jet head 24 and the light sources 34A and 34B, which are arranged on the carriage 30, move integrally (together) with the carriage 30 along the guide mechanism 28. That is, a scanning speed of the carriage 30 is the same as a scanning speed of the ink jet head 24. In addition, a scanning distance (one-way moving distance in the scanning direction) per time of the carriage 30 is the same as a scanning distance of the ink jet head 24.

The scanning speed of the carriage 30 is not particularly limited, but from the viewpoint of further improving the image quality, rub resistance, and stretchability of the image to be obtained, it is preferably set to 500 mm/sec to 2,000 mm/sec.

The scanning distance per time of the carriage 30 is not particularly limited, but is preferably 100 mm to 6,000 mm, more preferably 500 nm to 6,000 nm, and still more preferably 1,200 nm to 6,000 nm.

In Fig. 1, an attachment unit 38 of an ink cartridge 36 is provided on a front surface of the left side toward a front surface of the apparatus main body 20. The ink cartridge 36 is an interchangeable ink supply source (ink tank) which stores the ink. The ink cartridge 36 is provided in response to the ink used in the ink jet recording apparatus 100. Each ink cartridge 36 for each color is connected to the ink jet head 24 by an ink supply path (not shown) formed independently of each other.

Fig. 2A is an explanatory view schematically showing a base material transport passage of the ink jet recording apparatus shown in Fig. 1. Figs. 2B and 2C are views for describing a modification example of the blower shown in Fig. 2A.

As shown in Fig. 2A, the ink jet recording apparatus 10 is provided with the platens 26A, 26B, and 26C which are a heating unit for heating the base material 12, a temperature control unit 50 which controls a temperatures of the platens 26A, 26B, and 26C, and a blower 33A which is a unit for blowing a gas to a surface of the base material on which the ink is landed.

The platen 26A is disposed in a region on an upstream side of the ink jet head 24. By disposing the platen 26A, the base material 12 can be heated before image recording.

The platen 26B is disposed in a region including directly below the ink jet head 24. By disposing the platen 26B, the base material 12 can be heated during the image recording.

The platen 26C is disposed in a region on a downstream side of the ink jet head 24. By disposing the platen 26C, the base material 12 can be heated after the image recording.

In the ink jet recording apparatus according to the present disclosure, the base material 12 may be heated by at least one of the platen 26A, 26B, or 26C.

In the ink jet recording apparatus according to the present disclosure, it is preferable that at least one of the platen 26A, 26B, or 26C is set to a temperature of 35°C to 60°C. In particular, from the viewpoint of improving the image quality, rub resistance, and stretchability of the image to be obtained, it is preferable that the platen 26A is set to a temperature of 35°C to 60°C, and it is more preferable that the platen 26A and the platen 26B are set to a temperature of 35°C to 60°C.

The temperature control unit 50 can individually control the temperatures of the platens 26A, 26B, and 26C.

Blowers 33A, 33B, and 33C are units for blowing a gas to the surface of the base material on which the ink is landed. It is preferable that the blowers are disposed above the ink jet head 24 or on the upstream side of the ink jet head 24 in the transport direction. The blower 33A is disposed above the ink jet head 24. The blowers 33B and 33C are disposed on the upstream side of the ink jet head 24 in the transport direction. The type of the gas blown by the blowers 33A, 33B, and 33C is not particularly limited, and may be air taken in from the outside. A temperature of the gas to be blown is, for example, 20°C to 60°C.

As the blower, an axial fan type (see Fig. 2B) or a cross-flow fan type (see Fig. 2C) is suitably used. It is preferable that the blowing is performed in a curtain shape in a base material width in the ink jet recording apparatus. Therefore, in the axial fan type, it is preferable to dispose a plurality of fans in a horizontal direction. In addition, in the cross-flow fan type, it is preferable to dispose a fan having a length which can blow air over the entire width of the base material. It is preferable that the ink is continuously blown during the jetting to form laminar flow on the surface of the base material.

It is preferable that the blowers 33A, 33B, and 33C are disposed at an angle such that the air flows to an outlet side in the transport direction. The wind speed is, for example, 1.0 m/sec to 5.0 m/sec.

The ink can be dried and the ink jet head 24 can be cooled by the gas blown from the blowers 33A, 33B, and 33C.

In Figs. 2A to 2C, the blowers are disposed one by one, but a plurality of blowers may be disposed in the ink jet recording apparatus. For example, the blower 33A and the blower 33B may be combined, and disposed above the ink jet head 24 and on the upstream side of the ink jet head 24 in the transport direction.

A pair of nip rollers 40 as a transport unit for intermittently transporting the base material 12 is disposed between the platen 26A and the platen B. The nip roller 40 moves the base material 12 in the transport direction (X direction) on the platens 26A, 26B, and 26C.

A guide 46 of the base material 12 is provided in a region on a downstream side of the ink jet head 24. The guide 46 is a unit which suppresses deviation in the transport direction.

A supply roll 42 around which the base material supplied in the transport direction is wound is provided on a rear side of the ink jet recording apparatus 100. The supply roll 42 is rotatably supported by a frame member (not shown).

A winding roll 44 which winds the base material 12 after the image recording is provided on a front side of the ink jet recording apparatus 100. The winding roll 44 is rotatably supported by a frame member (not shown).

Hereinafter, details of the ink jet head 24 and the light sources 34A and 34B will be described.

Figs. 3A and 3B are plan perspective views showing examples of a disposition form of the ink jet head 24 and the light sources 34A and 34B.

(Ink jet head)

The ink jet head 24 is provided with nozzle rows 61W, 61M, 61Lm, 61C, 61Lc, 61Y, 61K, and 61CL for jetting inks of respective colors for each of white (W) ink (CL), yellow (Y) ink, magenta (M) ink, cyan (C) ink, black (K) ink, light cyan (Lc) ink, light magenta (Lm) ink, and clear (transparent) ink. In Figs. 3A and 3B, the nozzle rows are shown by dotted lines, and the individual nozzle is not shown. In addition, in the following description, the nozzle rows 61W, 61M, 61Lm, 61C, 61Lc, 61Y, 61K, and 61CL may be collectively referred to by a reference numeral 61 to represent the nozzle rows.

In the present disclosure, the type of the ink is not particularly limited. For example, a form in which the nozzle rows of Lc and Lm are omitted, a form in which any one of the nozzle rows of CL and W is omitted, a form in which a nozzle row of a metal ink is added, a form in which a nozzle row of a metal ink is provided instead of the nozzle row of W, a form in which a nozzle row for jetting a special color ink is added, and the like can be used. In addition, the arrangement order of the nozzle rows for each color is not particularly limited.

By configuring a head module for each nozzle row 61 for each color and arranging the head modules, the ink jet head 24 capable of performing color drawing can be obtained. For example, an aspect in which a head module 24Y having the nozzle row 61Y for jetting yellow ink, a head module 24M having the nozzle row 61M for jetting magenta ink, a head module 24C having the nozzle row 61C for jetting cyan ink, a head module 24K having the nozzle row 61K for jetting black ink, and head modules 24Lc, 24Lm, 24CL, and 24W each having the nozzle rows 61Lc, 61Lm, 61CL, and 61W for jetting inks of respective colors of Lc, Lm, CL, and W are arranged at equal intervals along the scanning direction (Y direction) of the carriage 30 can be adopted. It is also possible that ink flow passages are formed separately for each color inside one ink jet head 24, and a nozzle row for jetting inks of a plurality of colors is provided in one head.

In each nozzle row 61, a plurality of nozzles are arranged at regular intervals in the transport direction (X direction).

Figs. 4A and 4B are plan perspective views showing the nozzle arrangement of the ink jet head 24. As shown in Fig. 4A, a plurality of nozzles 70 may be arranged in one row. In addition, as shown in Fig. 4B, the plurality of nozzles 70 may be arranged in two rows in a state of being alternately shifted.

(Light source)

The light sources 34A, 34B, and 34C emit active energy rays.

Examples of the light source include discharge lamps such as a mercury lamp, a metal halide lamp, a high-pressure mercury lamp, a medium-pressure mercury lamp, a low-pressure mercury lamp, an ultraviolet fluorescent lamp; laser light sources such as a gas laser and a solid-state laser; and semiconductor light sources such as a light emitting diode (LED) and a laser diode (LD).

Among these, as the light source, a metal halide lamp, a high-pressure mercury lamp, a medium-pressure mercury lamp, a low-pressure mercury lamp, or an ultraviolet LED (hereinafter, also called UV-LED), which is a light source for ultraviolet irradiation, is preferable.

A peak wavelength of the ultraviolet ray is, for example, preferably 200 nm to 405 nm, more preferably 220 nm to 400 nm, and still more preferably 340 nm to 400 nm.

A peak wavelength of the light (LED light) from the LED light source is preferably 200 nm to 600 nm, more preferably 300 nm to 450 nm, still more preferably 320 nm to 420 nm, even more preferably 340 nm to 405 nm, and even still more preferably 355 nm, 365 nm, 385 nm, 395 nm, or 405 nm.

Examples of UV-LED include UV-LED manufactured by NICHIA CORPORATION that has a main emission spectrum having a wavelength between 365 nm and 420 nm.

Examples thereof also include UV-LED described in US6084250B which can emit a radioactive ray centered between 300 nm and 370 nm.

In addition, by combining several UV-LEDs, it is possible to radiate ultraviolet rays in different wavelength ranges.

It is preferable that the light sources 34A, 34B, and 34C are in a form in which a plurality of light source elements are arranged at regular intervals along the scanning direction (Y direction). Examples of the light source element include a UV-LED element.

Fig. 5 is a plan view showing a configuration example of the light sources 34A and 34B.

In Fig. 5, the light sources 34A and 34B include twelve light source elements 35. The six light source elements 35 are arranged at equal intervals in the scanning direction, and are arranged in two rows in a state of being alternately shifted.

An illuminance of the light sources 34A, 34B, and 34C is, for example, 500 mW to 15,000 mW.

(Distance between nozzle and light source)

Fig. 6 is a perspective view showing a disposition configuration of the ink jet head and the light source.

In the ink jet recording apparatus 10 according to the present disclosure, a distance (hereinafter, referred to as

"distance X1") along the transport direction between an end part of the nozzle 70 on the downstream side in the transport direction and an end part of the light source on the upstream side in the transport direction is 10 mm to 200 mm.

Specifically, the distance X1 means a distance along the transport direction (X direction) between a straight line D1 and a straight line D2 in Fig. 6.

As shown in Figs. 4A and 4B, the straight line D1 is a straight line parallel to the scanning direction, which passes through a center of the nozzle 70 located on the most downstream side in the transport direction, among the nozzles 70 included in the nozzle row 61.

As shown in Fig. 5, the straight line D2 is a straight line parallel to the scanning direction, which passes through a center of the light source elements 35 located on the most upstream side in the transport direction, among the light source elements 35 included in the light source 34A.

The term "downstream side" means a side toward the transport direction. The term "upstream side" means a side facing a direction opposite to the transport direction.

In a case where the distance X1 is 10 mm to 200 mm, the image quality, rub resistance, and stretchability of the image to be obtained are excellent. This is because a volatile component contained in the ink which has landed on the base material evaporates, the landing interference between the inks is suppressed, and the polymerizable compound A sufficiently bleeds out from the particles contained in the ink, so that the polymerization of the polymerizable compound A is promoted. From the viewpoint of further improving the image quality, rub resistance, and stretchability of the image to be obtained, the straight line X1 is preferably 40 mm to 150 mm and more preferably 60 mm to 100 mm.

The position of the light source with respect to the ink jet head is not particularly limited as long as the disposition relationship is such that the distance X1 is 10 nm to 200 nm. As in the light sources 34A and 34B shown in Fig. 3A, the light sources 34A and 34B may be disposed at both ends of the ink jet head 24 in the scanning direction. In addition, as in the light source 34C shown in Fig. 3B, the light sources 34A and 34B may be disposed at a position away from the ink jet head 24 in the transport direction.

Fig. 7 is a block diagram showing a main configuration of a control system of the ink jet recording apparatus 10. As shown in Fig. 7, the ink jet recording apparatus 10 is provided with a control device 102 as a controller.

As the control device 102, for example, a computer or the like, including a central processing unit (CPU), can be used. The control device 102 functions as a control device which controls the entire ink jet recording apparatus 10 in accordance with a predetermined program, and also functions as a computing device which performs various types of computation. The control device 102 includes a base material transport control unit 104, a carriage drive control unit 106, a blower control unit 108, a light source control unit 109, an image processing unit 110, and a jetting control unit 112. Each of these units is realized by a hardware circuit, software, or a combination thereof.

The base material transport control unit 104 controls a transport driving unit 114 for transporting the base material 12. The transport driving unit 114 includes a drive motor which drives the nip roller 40 shown in Fig. 2 and a drive circuit thereof. The base material 12 transported on the platen 26A, 26B, or 26C is intermittently fed in the transport direction in accordance with reciprocation of the ink jet head 24 in the scanning direction.

The carriage driving control unit 106 controls a scanning driving unit 116 for moving the carriage 30 in the scanning direction. The scanning driving unit 116 includes a drive motor connected to the moving mechanism of the carriage 30, and a control circuit thereof.

The blower control unit 108 is a unit which controls the operation of the blower through a blower drive circuit 118.

The light source control unit 109 is a controller which controls light emission of the light source elements of the light sources 34A and 34B through an element drive circuit 119.

An input device 120 such as an operation panel and a display device 122 are connected to the control device 102. The input device 120 is a unit which inputs a manual external operation signal to the control device 102, and for example, various forms such as a keyboard, a mouse, a touch panel, and an operation button can be employed. Various forms such as a liquid crystal display, an organic EL display, and a CRT can be employed as the display device 122. By operating the input device 120, the operator can select a drawing mode, input printing conditions, input and edit additional information, and the like, and various types of information such as input contents and search results can be confirmed through the display of the display device 122.

**In** addition, the ink jet recording apparatus 10 is provided with an information storage unit 124 which stores various types of information, and an image input interface 126 for capturing image data for printing. A serial interface or a parallel interface may be applied to the image input interface. A buffer memory (not shown) for increasing speed of communication may be mounted in the part.

The image data input through the image input interface 126 is converted into data (dot data) for printing by the image processing unit 110. The dot data is generally generated by performing color conversion processing and halftone processing on image data of multiple gradations. The color conversion processing is processing of converting image data represented by sRGB (for example, image data of 8 bits for each color of RGB) or the like into color data of each color of ink used in the ink jet recording apparatus 10.

The jetting control unit 112 generates a jetting control signal for a head drive circuit 128, based on the dot data

generated in the image processing unit 110. In addition, the jetting control unit 112 includes a drive waveform generation unit (not shown). The drive waveform generation unit is a unit which generates a voltage waveform of a drive voltage for driving a jetting energy generating element (in the present example, a piezoelectric element) corresponding to each nozzle of the ink jet head 24.

The drive waveform data is stored in advance in the information storage unit 124, and the drive waveform data to be used is output as necessary. The drive waveform output from the drive waveform generation unit is supplied to the head drive circuit 128. A signal output from the drive waveform generation unit may be digital waveform data or an analog voltage signal.

A common drive voltage is applied to each jetting energy generating element of the ink jet head 24 through the head drive circuit 128, and on-off of a switching element (not shown) connected to an individual electrode of each energy generating element is switched in accordance with a jetting timing of each nozzle, so that the ink is jetted from the corresponding nozzle.

The information storage unit 124 stores a program executed by the CPU of the control device 102, various data required for control, and the like. The information storage unit 124 stores setting information of a resolution corresponding to the drawing mode, the number of passes (number of repetitions of scanning), sending amount information necessary for controlling the amount of transport and sending, control information of the light sources 34A and 34B, and the like.

The number of passes is not particularly limited, but is preferably 1 pass to 32 passes, more preferably 3 passes to 16 passes, and still more preferably 6 passes to 12 passes.

An encoder 130 is attached to the drive motor of the scanning driving unit 116 and the drive motor of the transport driving unit 114, and outputs a pulse signal corresponding to the amount of rotation and the rotation speed of the drive motor; and the pulse signal is sent to the control device 102. The position of the carriage 30 and the position of the base material 12 are grasped based on the pulse signal output from the encoder 130.

A sensor 132 includes sensors provided in each part of the apparatus. For example, the width of the base material 12 is grasped based on the sensor signal obtained from the sensor 132 by a sensor which detects the width of the base material 12 attached to the carriage 30.

Other examples of the sensor 132 include a temperature sensor which detects a temperature of the ink, a position detection sensor which detects a position of the base material, and a pressure sensor. For example, the control device 102 sends a command signal to a heater control unit (not shown) based on temperature information of the ink, obtained from a temperature sensor which detects the temperature of the ink, and the heater control unit controls the operation of the heater based on the command signal from the control device 102.

<Modification examples>

The above-described ink jet recording apparatus 10 includes the blower 33, but the ink jet recording apparatus according to the present disclosure may not include the blower. In addition, the above-described ink jet recording apparatus 10 is provided with the light sources 34A and 34B as the main curing light sources for completely curing the ink, but a temporary curing light source may be provided in addition to the main curing light sources. In a case where the temporary curing light source is provided, it is preferable that the temporary curing light source is also mounted on the carriage 30. The temporary curing light source is a unit for emitting the active energy ray with an exposure amount smaller than that of the main curing light source. In a case where the temporary hardening light source is provided, the exposure is performed in the order of the temporary curing light source and the main curing light sources (the light sources 34A and 34B).

<Base material>

The base material used in the ink jet recording apparatus according to the present disclosure is not particularly limited, and may be a permeable base material or an impermeable base material, but is preferably an impermeable base material.

Here, the impermeable base material refers to a base material having a water absorption rate (unit: % by mass, measurement time: 24 hours) of less than 10 in ASTM D570 of the ASTM test method.

The above-described water absorption rate of the impermeable base material is preferably 5% by mass or less.

Examples of the impermeable base material include paper on which plastic (for example, polyethylene, polypropylene, polystyrene, or the like) is laminated, polyester cloth, a metal plate (for example, a plate of a metal such as aluminum, zinc, and copper), a plastic film (for example, a film of polyvinyl chloride (PVC) resin, cellulose diacetate, cellulose triacetate, cellulose propionate, cellulose butyrate, cellulose acetate butyrate, cellulose nitrate, polyethylene terephthalate (PET), polyethylene (PE), polystyrene (PS), polypropylene (PP), polycarbonate (PC), polyvinyl acetal, an acrylic resin, or the like), paper on which the metal is laminated or vapor-deposited, a plastic film on which the metal is laminated or vapor-deposited, and leather.

Examples of the leather include natural leather (also called "real leather") and synthetic leather (for example, polyvinyl chloride (PVC) leather or polyurethane (PU) leather). For the leather, for example, paragraphs 0163 to 0165 of JP2009-058750A can be referred to.

For example, in a case of forming an ink film on leather (for example, a seat sheet for a vehicle, a bag, shoes, a wallet, and the like) or a plastic film as the impermeable base material, the formed ink film is required to have excellent rub resistance and stretchability.

In addition, in formation of an ink film on a base material other than leather and a plastic film, excellent rub resistance and stretchability may be required for the formed film.

With the ink jet recording apparatus according to the present disclosure, such a demand can be satisfied. From such a viewpoint, the use of PVC as the base material is more effective.

The base material may be subjected to a surface treatment from the viewpoint of improving the surface energy.

Examples of the surface treatment include a corona treatment, a plasma treatment, a flame treatment, a heat treatment, an abrasion treatment, and a light irradiation treatment (UV treatment), but the surface treatment is not limited thereto.

A thickness of the base material is not particularly limited, but is preferably 20 μm to 500 μm from the viewpoint of flexibility.

<Ink>

The ink used in the ink jet recording apparatus according to the present disclosure contains water and particles which contain a polymer P having an acid group and a polymerizable compound A. As described above, the ink jet recording apparatus according to the present disclosure is suitable for an ink containing water and particles which contain a polymer P having an acid group and a polymerizable compound A. By using the ink jet recording apparatus according to the present disclosure, the polymerizable compound A sufficiently bleeds out from the particles contained in the ink, and thus the polymerization of the polymerizable compound A is promoted, and the rub resistance and the stretchability are excellent.

Hereinafter, each component contained in the ink will be described in detail.

(Water)

The ink contains water.

A content of water with respect to the total amount of the ink can be, for example, 10% by mass or more and 99% by mass or less.

The content of the water with respect to the total amount of the ink is preferably 10% by mass or more, more preferably 20% by mass or more, still more preferably 30% by mass or more, and particularly preferably 50% by mass or more.

The upper limit of the content of the water with respect to the total amount of the ink is appropriately determined according to contents of other components, and is, for example, 99% by mass, preferably 95% by mass and more preferably 90% by mass.

<Particles>

The ink contains at least one kind of particles containing the polymer P and the polymerizable compound A (hereinafter, also referred to as "specific particles").

In the ink, the fact that the polymer P and the polymerizable compound A are contained in the specific particles contributes to storage stability of the ink.

A preferred aspect of the ink is an aspect in which the polymerizable compound A remains in the specific particles of the ink before being applied onto the base material, and the polymerizable compound A bleeds out from the specific particles of the ink applied onto the base material.

(Polymerizable compound A)

The specific particles contain at least one polymerizable compound A. The specific particles may contain only one or two or more kinds of the polymerization compounds A.

The polymerizable compound A is not particularly limited as long as it is a compound having a polymerizable group.

A molecular weight of the polymerizable compound A is not particularly limited, but from the viewpoint of improving the stretchability of the image, a weight-average molecular weight thereof is preferably 1,000 or more, more

preferably 1,500 or more, and still more preferably 2,000 or more. On the other hand, the upper limit value of the weight-average molecular weight of the polymerizable compound A is not particularly limited, but from the viewpoint of dispersion stability, it is preferably 20,000 or less, and more preferably 15,000 or less. The weight-average molecular weight of the polymerizable compound A may be in a range of 1,000 to 20,000.

In the present disclosure, the weight-average molecular weight (Mw) means a value measured by gel permeation chromatography (GPC).

In the measurement by GPC, HLC (registered trademark)-8020GPC (Tosoh Corporation) is used as a measuring device, three columns of TSKgel (registered trademark) Super Multipore HZ-H (4.6 mmID x 15 cm, Tosoh Corporation) are used as a column, and tetrahydrofuran (THF) is used as an eluent. In addition, as the measurement conditions, a sample concentration of 0.45% by mass, a flow rate of 0.35 ml/min, a sample injection amount of 10 μL, and a measurement temperature of 40°C are set, and a RI detector is used.

The calibration curve is created from eight samples of "Standard sample TSK standard, polystyrene" manufactured by Tosoh Corporation: "F-40", "F-20", "F-4", "F-1", "A-5000", "A-2500", "A-1000", and "n-propylbenzene".

The type of the polymerizable group included in the polymerizable compound A is not particularly limited, but from the viewpoint of curing properties, an ethylenically unsaturated group is more preferable.

Examples of the ethylenically unsaturated group contained in the polymerizable compound A include a (meth)acryloyl group, a vinyl group, a vinyl ester group, and a vinyl ether group. From the viewpoint of reactivity, the ethylenically unsaturated group is preferably a (meth)acryloyl group or a vinyl group, and more preferably a (meth)acryloyl group. Examples of the (meth)acryloyl group include a (meth)acryloyloxy group and a (meth)acrylamide group. Among these, from the viewpoint of further improving the rub resistance of the image, the ethylenically unsaturated group is preferably a (meth)acryloyl group, more preferably an acryloyl group, and still more preferably an acryloyloxy group.

The number of polymerizable groups included in the polymerizable compound A may be one or two or more, but from the viewpoint of improving the rub resistance of the image, it is preferably two or more. The upper limit value of the number of polymerizable groups is not particularly limited, but is, for example, 20. From the viewpoint of ease of synthesis, the number of ethylenically unsaturated groups is preferably 2, 3, 6, 9, 10, 15, or 20.

In addition, from the viewpoint of further improving the rub resistance of the image, the polymerizable compound A is preferably a urethane (meth)acrylate having two or more (meth)acryloyl groups in one molecule.

The urethane (meth)acrylate is a compound having a (meth)acryloyl group and having a urethane bond. **In** a case where the polymerizable compound A contains a urethane bond, it is considered that the rub resistance of the image is improved because adhesiveness to the base material is improved. **In** addition, it is considered that the strength of the ink film is improved by a hydrogen bond between the urethane bonds, and as a result, the rub resistance of the image is improved.

The urethane (meth)acrylate can be produced, for example, by reacting a bifunctional isocyanate compound with a hydroxyl group-containing (meth)acrylate and, in some cases, a polyol.

Examples of the bifunctional isocyanate compound include aliphatic diisocyanates such as methylene diisocyanate, dimethylene diisocyanate, trimethylene diisocyanate, tetramethylene diisocyanate, pentamethylene diisocyanate, hexamethylene diisocyanate, dipropyl ether diisocyanate, 2,2-dimethylpentane diisocyanate, 3-methoxyhexane diisocyanate, octamethylene diisocyanate, 2,2,4-trimethylpentane diisocyanate, nonamethylene diisocyanate, decamethylene diisocyanate, 3-butoxyhexane diisocyanate, 1,4-butylene glycol dipropyl ether diisocyanate, and thiodihexyl diisocyanate; aromatic diisocyanates such as m-phenylene diisocyanate, p-phenylene diisocyanate, 2,4-tolylene diisocyanate, 2,6-tolylene diisocyanate, dimethylbenzene diisocyanate, ethylbenzene diisocyanate, isopropylbenzene diisocyanate, tolidine diisocyanate, 1,4-naphthalene diisocyanate, 1,5-naphthalene diisocyanate, 2,6-naphthalene diisocyanate, 2,7-naphthalene diisocyanate, metaxylylene diisocyanate, paraxylylene diisocyanate, and tetramethylxylylene diisocyanate; and alicyclic diisocyanates such as hydrogenated xylylene diisocyanate, isophorone diisocyanate, and dicyclohexylmethane 4,4'-diisocyanate.

Examples of the hydroxyl group-containing (meth)acrylate include 2-hydroxyethyl (meth)acrylate, 3-hydroxypropyl (meth)acrylate, 2-hydroxypropyl (meth)acrylate, 2-hydroxybutyl (meth)acrylate, 3-hydroxybutyl (meth)acrylate, 4-hydroxybutyl (meth)acrylate, phenylglycidyl ether (meth)acrylate, pentaerythritol (meth)acrylate, and dipentaerythritol penta(meth)acrylate.

**In** addition, examples of the polymerizable compound A include an acrylate compound, a methacrylate compound, a styrene compound, a vinyl naphthalene compound, an N-vinyl heterocyclic compound, an N-vinylamide, an unsaturated polyester, an unsaturated polyether, an unsaturated polyamide, and an unsaturated urethane.

Examples of the acrylate compound include monofunctional acrylate compounds such as 2-hydroxyethyl acrylate, butoxyethyl acrylate, carbitol acrylate, cyclohexyl acrylate, tetrahydrofurfuryl acrylate, 2-phenylphenoxyethyl acrylate, benzyl acrylate, tridecyl acrylate, 2-phenoxyethyl acrylate (PEA), bis(4-acryloxypolyethoxyphenyl)propane, oligoester acrylate, epoxy acrylate, isobornyl acrylate (IBOA), dicyclopentenyl acrylate, dicyclopentenyloxyethyl acrylate, dicyclopentanyl acrylate, cyclic trimethylolpropane formal acrylate, 2-(2-ethoxyethoxy)ethyl acrylate, 2-(2-vinyloxyethoxy)ethyl acrylate, octyl acrylate, decyl acrylate, isodecyl acrylate, lauryl acrylate, 3,3,5-trimethylcyclohexyl acrylate,

4-t-butylcyclohexyl acrylate, isoamyl acrylate, stearyl acrylate, isostearyl acrylate, 2-ethylhexyldiglycol acrylate, 2-hydroxybutyl acrylate, 2-acryloyloxyethylhydrophthalic acid, ethoxydiethylene glycol acrylate, methoxydiethylene glycol acrylate, methoxypolyethylene glycol acrylate, methoxypropylene glycol acrylate, 2-hydroxy-3-phenoxypropyl acrylate, vinyl ether acrylate, 2-acryloyloxyethyl succinate, 2-acryloyloxyphthalic acid, 2-acryloxyethyl-2-hydroxyethylphthalic acid, lactone-modified acrylate, acryloylmorpholine, acrylamide, and substituted acrylamide (for example, N-methylol acrylamide and diacetone acrylamide); bifunctional acrylate compounds such as polyethylene glycol diacrylate, polypropylene glycol diacrylate, polytetramethylene glycol diacrylate, 1,3-butylene glycol diacrylate, 1,4-butanediol diacrylate, 1,6-hexanediol diacrylate (HDDA), 1,9-nonandiol diacrylate (NDDA), 1,10-decanediol diacrylate (DDDA), 3-methylpentadiol diacrylate (3MPDDA), neopentyl glycol diacrylate, tricyclodecane dimethanol diacrylate, diacrylate of bisphenol A ethylene oxide (EO) adduct, diacrylate of bisphenol A propylene oxide (PO) adduct, ethoxylated bisphenol A diacrylate, hydroxynopentyl glycol diacrylate, propoxylated neopentyl glycol diacrylate, alkoxylated dimethylol tricyclodecane diacrylate, polytetramethylene glycol diacrylate, alkoxylated cyclohexanone dimethanol diacrylate, alkoxylated hexanediol diacrylate, dioxane glycol diacrylate, cyclohexanone dimethanol diacrylate, diethylene glycol diacrylate, neopentyl glycol diacrylate, tetraethylene glycol diacrylate, dipropylene glycol diacrylate, tripropylene glycol diacrylate (TPGDA), and diacrylate of neopentyl glycol propylene oxide adduct; andtri- or higher functional acrylate compounds such as trimethylolpropane triacrylate, pentaerythritol triacrylate, dipentaerythritol tetraacrylate, ethoxylated isocyanuric acid triacrylate, ε-caprolactone-modified tris-(2-acryloxyethyl) isocyanurate, ditrimethylolpropane tetraacrylate, dipentaerythritol pentaacrylate, dipentaerythritol hexaacrylate, ethoxylated trimethylolpropane triacrylate, propoxylated trimethylolpropane triacrylate, caprolactone-modified trimethylolpropane triacrylate, pentaerythritol tetraacrylate, pentaerythritol ethoxy tetraacrylate, glycerin propoxyl triacrylate, ethoxylated dipentaerythritol hexaacrylate, caprolactam-modified dipentaerythritol hexaacrylate, propoxylated glycerin triacrylate, ethoxylated trimethylolpropane triacrylate, and propoxylated trimethylolpropane triacrylate.

Examples of the methacrylate compound include monofunctional methacrylate compounds such as methyl methacrylate, n-butyl methacrylate, allyl methacrylate, glycidyl methacrylate, benzyl methacrylate, dimethylaminomethyl methacrylate, methoxypolyethylene glycol methacrylate, methoxytriethylene glycol methacrylate, hydroxyethyl methacrylate, phenoxyethyl methacrylate, and cyclohexyl methacrylate; and

bifunctional methacrylate compounds such as polyethylene glycol dimethacrylate, polypropylene glycol dimethacrylate, 2,2-bis(4-methacryloxypolyethoxyphenyl)propane, and tetraethylene glycol dimethacrylate.

Examples of the styrene compound include styrene, p-methylstyrene, p-methoxystyrene, β-methylstyrene, p-methyl-β-methylstyrene, α-methylstyrene, and p-methoxy-β-methylstyrene.

Examples of the vinyl naphthalene compound include 1-vinylnaphthalene, methyl-1-vinylnaphthalene, β-methyl-1-vinylnaphthalene, 4-methyl-1-vinylnaphthalene, and 4-methoxy-1-vinylnaphthalene.

Examples of the N-vinyl heterocyclic compound include N-vinyl carbazole, N-vinylpyrrolidone, N-vinyl ethylacetamide, N-vinylpyrrole, N-vinyl phenothiazine, N-vinyl acetanilide, N-vinyl ethylacetamide, N-vinyl succinimide, N-vinyl phthalimide, N-vinyl caprolactam, and N-vinyl imidazole.

Examples of the N-vinylamide include allyl glycidyl ether, diallyl phthalate, triaryltrimellitate, and N-vinylformamide.

Among these, as the bi- or higher functional radically polymerizable monomer, at least one selected from 1,6-hexanediol diacrylate (HDDA), 1,9-nonanediol diacrylate (NDDA), 1,10-decanediol diacrylate (DDDA), 3-methylpentanediol diacrylate (3MPDDA), neopentyl glycol diacrylate, tricyclodecane dimethanol diacrylate, diethylene glycol diacrylate, tetraethylene glycol diacrylate, dipropylene glycol diacrylate, tripropylene glycol diacrylate (TPGDA), cyclohexanone dimethanol diacrylate, alkoxylated hexanediol diacrylate, polyethylene glycol diacrylate, or polypropylene glycol diacrylate is preferable.

**In** addition, as the tri- or higher functional radically polymerizable monomer, at least one selected from trimethylolpropane triacrylate, pentaerythritol triacrylate, dipentaerythritol tetraacrylate, ditrimethylolpropane tetraacrylate, dipentaerythritol pentaacrylate, dipentaerythritol hexaacrylate, ethoxylated trimethylolpropane triacrylate, propoxylated trimethylolpropane triacrylate, caprolactone-modified trimethylolpropane triacrylate, pentaerythritol tetraacrylate, pentaerythritol ethoxy tetraacrylate, glycerin propoxyl triacrylate, ethoxylated dipentaerythritol hexaacrylate, caprolactam-modified dipentaerythritol hexaacrylate, propoxylated glycerin triacrylate, ethoxylated trimethylolpropane triacrylate, or propoxylated trimethylolpropane triacrylate is preferable.

Examples of the combination of the bi- or higher functional radically polymerizable monomer and the tri- or higher functional radically polymerizable monomer include a combination of a bifunctional acrylate compound and a trifunctional acrylate compound, a combination of a bifunctional acrylate compound and a pentafunctional acrylate compound, and a combination of a monofunctional acrylate compound and a tetrafunctional acrylate compound.

In addition, the polymerizable compound A is preferably a polymerizable compound having a cyclic structure; more preferably a bifunctional cyclic (meth)acrylate such as tricyclodecanedimethanol di(meth)acrylate, a di(meth) acrylate of bisphenol A ethylene oxide (EO) adduct, a di(meth)acrylate of bisphenol A propylene oxide (PO) adduct, an ethoxylated bisphenol A di(meth)acrylate, an alkoxylated dimethylol tricyclodecan di(meth)acrylate, an alkoxylated

cyclohexanone dimethanol di(meth)acrylate, and a cyclohexanone dimethanol di(meth)acrylate, a monofunctional cyclic (meth)acrylate such as cyclohexyl (meth)acrylate, tetrahydrofurfuryl (meth)acrylate, benzyl (meth)acrylate, isobornyl (meth)acrylate, dicyclopentenyl (meth)acrylate, dicyclopentenyloxyethyl (meth)acrylate, and dicyclopentanyl (meth) acrylate, an ethoxylated isocyanuric acid tri(meth)acrylate, or an ε-caprolactone-modified tris-(2-(meth)acryloxyethyl) isocyanurate; still more preferably the bifunctional cyclic (meth)acrylate, dicyclopentenyl acrylate, dicyclopentenyloxyethyl acrylate, or dicyclopentanyl acrylate; and particularly preferably the bifunctional cyclic (meth)acrylate.

In addition to the above, commercially available products described in "Crosslinking Agent Handbook" (1981, edited by Shinzo Yamashita, published by Taiseisha, Ltd.), "UV·EB Curing Handbook (part of raw materials)" (1985, edited by Kiyoshi Kato, published by Kobunshi Kankokai), "Application and Market of UV·EB Curing Technology" (p. 79, 1989, edited by Rad Tech Japan, CMC Publishing Co., Ltd.), "Polyester Resin Handbook" (1988, written by Eiichiro Takiyama, published by Nikkan Kogyo Shimbun, Ltd.); or a radically polymerizable compound known in the field can be used.

In addition, photocurable polymerizable monomers used in photopolymerizable compositions described in JP1995-159983A (JP-H07-159983A), JP1995-31399A (JP-H07-31399A), JP1996-224982A (JP-H08-224982A), JP1998-863A (JP-H10-863A), JP1997-134011A (JP-H09-134011A), JP2004-514014A, and the like are also known, and these can also be adopted as the polymerizable compound A which can be contained in the specific particles.

As the polymerizable compound A, a commercially available product on the market may be used.

Examples of the commercially available product include AH-600 (bifunctional), AT-600 (bifunctional), UA-306H (hexafunctional), UA-306T (hexafunctional), UA-306I (hexafunctional), UA-510H (decafunctional), UF-8001G (bifunctional), DAUA-167 (bifunctional), Light Acrylate NPA (bifunctional), and Light Acrylate 3EG-A (bifunctional) (all of which are available from KYOEISHA CHEMICAL Co., Ltd.); SR339A (PEA, monofunctional), SR506 (IBOA, monofunctional), CD262 (bifunctional), SR238 (HDDA, bifunctional), SR341 (3MPDDA, bifunctional), SR508 (bifunctional), SR306H (bifunctional), CD560 (bifunctional), SR833S (bifunctional), SR444 (trifunctional), SR454 (trifunctional), SR492 (trifunctional), SR499 (trifunctional), CD501 (trifunctional), SR502 (trifunctional), SR9020 (trifunctional), CD9021 (trifunctional), SR9035 (trifunctional), SR494 (tetracfunctional), and SR399E (pentafunctional) (all of which are available from SARTOMER COMPANY, INC.); A-NOD-N (NDDA, bifunctional), A-DOD-N (DDDA, bifunctional), A-200 (bifunctional), APG-400 (bifunctional), A-BPE-10 (bifunctional), A-BPE-20 (bifunctional), A-9300 (trifunctional), A-9300-1CL (trifunctional), A-TMPT (trifunctional), A-TMM-3L (trifunctional), A-TMMT (tetracfunctional), AD-TMP (tetracfunctional) (all of which are available from Shin-Nakamura Chemical Co., Ltd.); UV-7510B (trifunctional) (available from Nippon Synthetic Chemical Industry Co., Ltd.); and KAYARAD DPCA-30 (hexafunctional) and KAYARAD DPEA-12 (hexafunctional) (both of which are available from Nippon Kayaku Co., Ltd.).

In addition, examples of the commercially available product include NPGPODA (diacrylate of neopentyl glycol propylene oxide adduct), SR531, SR285, and SR256 (all of which are available from Sartomer Company Inc.); A-DHP (dipentaerythritol hexaacrylate, Shin-Nakamura Chemical Co., Ltd.); ARONIX (registered trademark) M-156 (TOAGOSEI CO., LTD.); V-CAP (BASF SE); and VISCOAT #192 (Osaka Organic Chemical Industry Ltd.).

Among these, in particular, SR506, SR833S, A-9300, or A-9300-CL, which is a polymerizable monomer having a cyclic structure, is preferable, and SR833S is more preferable.

A content of the polymerizable compound A in the ink is preferably 1% by mass to 15% by mass and more preferably 2% by mass to 8% by mass with respect to the total amount of the ink.

(Polymer P having acid group)

The specific particles contain at least one polymer P having an acid group (hereinafter, also simply referred to as "polymer P").

The polymer P plays a role of retaining the polymerizable compound A in the specific particles of the ink before being applied onto the base material, and thus contributes to improving the storage stability of the ink.

The polymer P may be a chain-like polymer or a crosslinked polymer.

In the present disclosure, the chain-like polymer means a polymer having no crosslinked structure, and the crosslinked polymer means a polymer having a crosslinking structure.

The chain-like polymer may have a cyclic structure or a branched structure.

For the specific particles containing the polymer P which is the chain-like polymer, for example, JP6584677B can be referred to.

In a case where the polymer P is the crosslinked polymer, a preferred aspect of the specific particles includes microcapsules containing a shell consisting of the polymer P which is the crosslinked polymer and a core containing a polymerizable compound.

For the specific particles containing the polymer P which is the crosslinked polymer, for example, JP6510681B can be referred to.

-Weight-average molecular weight (Mw)-

A weight-average molecular weight (Mw) of the polymer P is preferably 3,000 to 200,000, more preferably 4,000 to 150,000, still more preferably 5,000 to 100,000, even more preferably 8,000 to 80,000, and even still more preferably 10,000 to 50,000.
In a case where Mw of the polymer P is 3,000 or more, the storage stability of the ink is further improved. The reason for this is considered to be that, in a case where Mw of the polymer P is 3,000 or more, the function of the polymer P (function of retaining the polymerizable compound A in the specific particles; in other words, function of suppressing bleeding out of the polymerizable compound A from the specific particles) is more effectively exhibited in the ink before being applied onto the base material.
In a case where Mw of the polymer P is 200,000 or less, blocking resistance of the image is further improved. The reason for this is considered to be that, in a case where Mw of the polymer P is 200,000 or less, a decrease in fluidity (that is, thickening) in the drying process of the ink applied onto the base material is suppressed, and as a result, volatilization of liquid components (that is, water and a water-soluble organic solvent) from the ink is further promoted.

-Glass transition temperature (Tg)-

A glass transition temperature (Tg) of the polymer P is not particularly limited.
From the viewpoint of improving mobility of the polymer P and further improving image quality of the image (specifically, suppressing roughness of the image), Tg of the polymer P is preferably 120°C or lower, more preferably 100°C or lower, still more preferably 80°C or lower, and even more preferably 70°C or lower.
On the other hand, Tg of the polymer P is preferably 0°C or higher, more preferably 10°C or higher, still more preferably 20°C or higher, and even more preferably 30°C or higher.
In the present disclosure, the glass transition temperature (Tg) of the polymer means a value measured by differential scanning calorimetry (DSC).
Specifically, the glass transition temperature is measured in conformity with the method described in JIS K 7121 (1987) or JIS K 6240 (2011).
The glass transition temperature in the present disclosure is an extrapolated glass transition start temperature (hereinafter, also referred to as Tig).
The method of measuring the glass transition temperature will be described in more detail.
In a case where the glass transition temperature is acquired, the resin is maintained at a temperature lower than the expected glass transition temperature of the resin by approximately 50°C until the device is stabilized, the resin is heated to a temperature higher than the temperature at which the glass transition is completed by approximately 30°C at a heating rate of 20 °C/min, and a differential thermal analysis (DTA) curve or a DSC curve is created.
The extrapolated glass transition start temperature (Tig), that is, the glass transition temperature in the present disclosure is acquired as the temperature of the intersection between a straight line obtained by extending the base line on a low temperature side in the DTA curve or the DSC curve onto a high temperature side and a tangent drawn at a point where the gradient of a curve from a step-like change portion of the glass transition is maximized.
In a case where the ink contains two or more kinds of the polymers P, the glass transition temperature (Tg) of the polymer P means a weighted average value of the glass transition temperatures of the individual polymers P.
Examples of the polymer P include a urethane polymer, a urethane urea polymer, a urea polymer, an acrylic polymer, a polyester, a polyolefin, a polystyrene, a polycarbonate, and a polyamide.
Here, the urethane polymer means a polymer containing a urethane bond and not containing a urea bond; the urea polymer means a polymer containing a urea bond and not containing a urethane bond; and the urethane urea polymer means a polymer containing a urethane bond and a urea bond.
In addition, the acrylic polymer means a polymer (homopolymer or copolymer) of a raw monomer including at least one selected from the group consisting of acrylic acid, a derivative of acrylic acid (for example, acrylic acid ester and the like), methacrylic acid, and a derivative of methacrylic acid (for example, methacrylic acid ester and the like).

-Bond U-

It is preferable that the polymer P contains a bond U which is at least one of a urethane bond or a urea bond. In other words, the polymer P is preferably a urethane polymer, a urethane urea polymer, or a urea polymer.
In a case where the polymer P contains the bond U, in the ink landed on the base material, the specific particles are likely to interact with each other due to interaction (for example, hydrogen bond) between the bonds U. Therefore, linking between the specific particles by the polymerization of the polymerizable compound A bleeding out from the specific particles is more likely to proceed. In this manner, since curing between the specific particles is more likely to proceed, the rub resistance of the image is further improved.

The bond U preferably contains a urethane bond.
**In** other words, it is preferable that the polymer P contains a urethane bond and does not contain a urea bond, or contains a urethane bond and a urea bond.

-Acid group-

The polymer P preferably contains at least one acid group.
This contributes to the dispersion stability of the specific particles in the ink, and as a result, the storage stability of the ink is further improved.
The acid group may be neutralized or may be unneutralized.
Examples of the unneutralized acid group include a carboxyl group, a sulfo group, a sulfate group, a phosphonate group, and a phosphate group.
The neutralized acid group means an acid group in a form of a "salt" (for example, a salt of a carboxy group (for example, -COONa)). Examples of the neutralized acid group include salts of acid groups, such as a salt of a carboxy group, a salt of a sulfo group, a salt of a sulfuric acid group, a salt of a phosphonic acid group, and a salt of a phosphoric acid group.
Neutralization can be performed using, for example, an alkali metal hydroxide (for example, sodium hydroxide, potassium hydroxide, and the like) and an organic amine (for example, triethylamine and the like).
From the viewpoint of further improving the storage stability of the ink, the acid group in the polymer P is preferably at least one selected from the group consisting of a carboxy group, a salt of a carboxy group, a sulfo group, a salt of a sulfo group, a sulfate group, a salt of a sulfate group, a phosphonate group, a salt of a phosphonate group, a phosphate group, and a salt of a phosphate group; and more preferably at least one selected from the group consisting of a carboxy group, a salt of a carboxy group, a sulfo group, and a salt of a sulfo group.
As the above-described "salt" in the salt of a carboxyl group, the salt of a sulfo group, the salt of a sulfate group, the salt of a phosphonate group, and the salt of a phosphate group, an alkali metal salt or an organic amine salt is preferable, and an organic amine salt is more preferable.
As an organic amine in the organic amine salt, N,N-diisopropylethylamine or triethylamine is preferable.
In addition, in a case where the total millimole number of acid groups (for example, a carboxy group and a salt of a carboxy group) contained in 1 g of the polymer P is defined as an acid value of the polymer P, the acid value of the polymer P is preferably 0.10 mmol/g to 2.00 mmol/g and more preferably 0.30 mmol/g to 1.50 mmol/g, from the viewpoint of dispersion stability.
In addition, a degree of neutralization of the acid group in the polymer P is preferably 50% to 100% and more preferably 70% to 100%.
Here, the degree of neutralization refers to a ratio of "the number of neutralized acid groups" to "the sum of the number of unneutralized acid groups (for example, carboxy groups) and the number of neutralized acid groups (for example, salts of carboxy groups)" in the polymer P (that is, a ratio [the number of neutralized acid groups/(the number of unneutralized acid groups + the number of neutralized acid groups]).
The degree of neutralization of the acid group in the polymer P can be measured by neutralization titration.

-Polymerizable group-

The specific particles contain not only the polymer P but also the polymerizable compound A. Therefore, the polymer P is not necessarily required to contain a polymerizable group. However, from the viewpoint of further improving the rub resistance of the image, the polymer P may contain a polymerizable group.
The polymerizable group which can be contained in the polymer P is preferably a photopolymerizable group or a thermal polymerizable group.
As the photopolymerizable group, a radically polymerizable group is preferable, a group having an ethylenic double bond is more preferable, and a (meth)acryloyl group, an allyl group, a styryl group, or a vinyl group is still more preferable. The radically polymerizable group is particularly preferably a (meth)acryloyl group from the viewpoint of radical polymerization reactivity and hardness of a film to be formed.
The thermally polymerizable group is preferably an epoxy group, an oxetanyl group, an aziridinyl group, an azetidinyl group, a ketone group, an aldehyde group, or a blocked isocyanate group.
The polymer P may contain only one kind of the polymerizable group or may contain two or more kinds thereof.
The fact that the polymer P contains a polymerizable group can be confirmed by, for example, Fourier transform infrared spectroscopy (FT-IR) analysis.
In a case where the number of millimoles of the ethylenic double bonds in 1 g of the polymer P is defined as a C=C value of the polymer P, the C=C value of the polymer P is preferably 0.05 mmol or more, more preferably 0.10 mmol/g or more, still more preferably 0.30 mmol/g or more, and particularly preferably 0.50 mmol/g or more, from the viewpoint of further improving the hardness of the image.

From the viewpoint of further improving water resistance and alcohol resistance of the image, the C=C value of the polymer P is preferably 0.05 mmol or more, more preferably 0.10 mmol/g or more, still more preferably 0.30 mmol/g or more, even more preferably 0.50 mmol/g or more, even still more preferably 0.60 mmol/g or more, and particularly preferably 0.70 mmol/g or more.
On the other hand, from the viewpoint of improving temporal curing properties of the ink (that is, suppressing a decrease in the curing properties of the ink over time), the C=C value of the polymer P is preferably 4.00 mmol/g or less, more preferably 3.00 mmol/g or less, still more preferably 2.00 mmol/g or less, and particularly preferably 1.50 mmol/g or less.
The polymer P may have a structure other than the above-described structure (that is, the bond U, the hydrophilic group, and the polymerizable group).
Examples of other structures include a polysiloxane bond (that is, a divalent polysiloxane group), a monovalent polysiloxane group, a monovalent fluorinated hydrocarbon group, and a divalent fluorinated hydrocarbon group.

-Preferred structure of polymer P-

The polymer P preferably includes a structural unit derived from an isocyanate compound and a structural unit derived from a compound containing an active hydrogen group.
The polymer P of the above-described preferred aspect includes the bond U formed by a reaction between an isocyanate group of the isocyanate compound and the active hydrogen group of the compound containing an active hydrogen group.
As the active hydrogen group, a hydroxy group, a primary amino group, or a secondary amino group is preferable.
For example, a urethane group is formed by a reaction between an isocyanate group and a hydroxy group.
In addition, a urea group is formed by a reaction between an isocyanate group and a primary amino group or a secondary amino group.
The isocyanate compound and the compound containing an active hydrogen group, which are raw materials of the polymer P having the above-described preferred structure, will be hereinafter referred to as a raw material compound.
The isocyanate compound as the raw material compound may be used alone or in combination of two or more kinds thereof.
The compound containing an active hydrogen group as the raw material compound may be used alone or in combination of two or more kinds thereof.
Among the isocyanate compounds as the raw material compound, a bi- or higher functional isocyanate compound is preferable.
As at least one of the compounds containing an active hydrogen group as the raw material compound, a compound containing two or more active hydrogen groups is preferable.
Among the raw material compounds, at least one of the isocyanate compound or the compound containing an active hydrogen group preferably contains a hydrophilic group. In this manner, it is easy to produce the polymer P containing a hydrophilic group. In this case, at least a part of hydrophilic groups in the finally obtained polymer P may be a group in which the hydrophilic group in the raw material compound is neutralized.
A more preferred aspect is an aspect in which at least one kind of the compound containing an active hydrogen group in the raw material compound is a compound containing an active hydrogen group and a hydrophilic group.
In a case where the polymer P contains a polymerizable group, among the raw material compounds, at least one of the isocyanate compound or the compound containing an active hydrogen group preferably contains a polymerizable group. In this manner, it is easy to produce the polymer P containing a polymerizable group.
A more preferred aspect is an aspect in which at least one kind of the compound containing an active hydrogen group in the raw material compound is a compound containing an active hydrogen group and a polymerizable group.
As described above, the polymer P may be a chain-like polymer or a crosslinked polymer.
The chain-like polymer as the polymer P can be produced by reacting a bifunctional isocyanate compound with a compound containing two active hydrogen groups.
The crosslinked polymer as the polymer P can be produced by reacting a tri- or higher functional isocyanate compound with a compound containing two or more active hydrogen groups.
The crosslinked polymer as the polymer P can also be produced by reacting a bi- or higher functional isocyanate compound with a compound containing three or more active hydrogen groups.
Hereinafter, preferred raw material compounds will be described.

-Isocyanate compound-

The isocyanate compound is preferably a bi- or higher functional isocyanate compound and more preferably a bi- to hexafunctional isocyanate compound.

The polymer P in a case where a bifunctional isocyanate compound is used as the raw material compound has the following structural unit (P1) which is a structural unit derived from the bifunctional isocyanate compound.

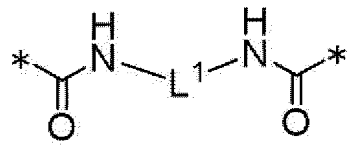

(P1)

In the structural unit (P1), $L^1$ represents a divalent organic group having 1 to 20 carbon atoms, and * represents a bonding position.

Specific examples of $L^1$ include a residue obtained by removing two isocyanate groups (NCO groups) from the bifunctional isocyanate compound according to the following specific examples.

Specific examples of the bifunctional isocyanate compound are as follows. However, the bifunctional isocyanate compound is not limited to the following specific examples.

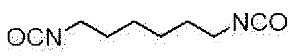

HDI

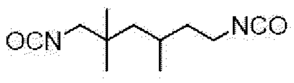

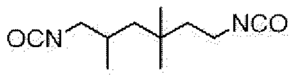

TMHDI

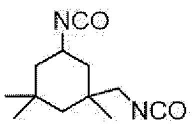

IPDI

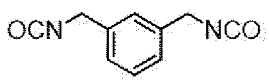

XDI

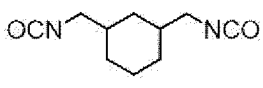

HXDI

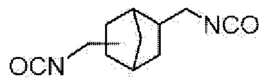

NBDI

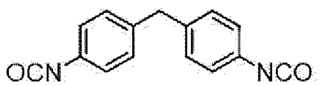

MDI

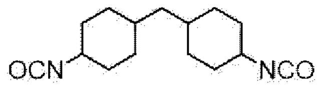

HMDI

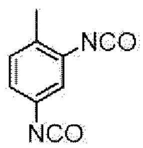

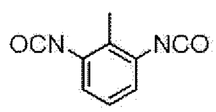

TDI

In addition, as the bifunctional isocyanate compound, a bifunctional isocyanate compound derived from the above-described specific examples can also be used. Examples thereof include DURANATE (registered trademark) D101, D201, and A101 (manufactured by Asahi Kasei Corporation).

In addition, it is preferable that the tri- or higher functional isocyanate compound is a reaction product of at least one selected from the group consisting of the bifunctional isocyanate compounds and at least one selected from the group consisting of compounds containing three or more active hydrogen groups (for example, a tri- or higher functional polyol compound, a tri- or higher functional polyamine compound, and a tri- or higher functional polythiol compound).

The number of moles (number of molecules) of the bifunctional isocyanate compound to react with the compound containing three or more active hydrogen groups is preferably 0.6 times or more, more preferably 0.6 times to 5 times, still more preferably 0.6 times to 3 times, and even more preferably 0.8 times to 2 times the number of moles of the active hydrogen group (number of equivalents of the active hydrogen group) in the compound containing three or more active hydrogen groups.

Examples of the bifunctional isocyanate compound for forming the tri- or higher functional isocyanate compound include the bifunctional isocyanate compounds according to the specific examples described above.

Examples of the compound containing three or more active hydrogen groups for forming the tri- or higher

functional isocyanate compound include compounds described in paragraphs 0057 and 0058 of WO2016/052053A.

Examples of the tri- or higher functional isocyanate compound include an adduct type tri- or higher functional isocyanate compound, an isocyanurate type tri- or higher functional isocyanate compound, and a biuret type tri- or higher functional isocyanate compound.

Examples of a commercially available product of the adduct type tri- or higher functional isocyanate compound include TAKENATE (registered trademark) D-102, D-103, D-103H, D-103M2, P49-75S, D-110N, D-120N, D-140N, and D-160N (Mitsui Chemicals, Inc.), DESMODUR (registered trademark) L75 and UL57SP (Sumika Bayer Urethane Co., Ltd.), CORONATE (registered trademark) HL, HX, and L (Nippon Polyurethane Industry Co., Ltd.), and P301-75E (Asahi Kasei Corporation.).

Examples of a commercially available product of the isocyanurate type tri- or higher functional isocyanate compound include TAKENATE (registered trademark) D-127N, D-170N, D-170HN, D-172N, and D-177N (Mitsui Chemicals, Inc.), SUMIDUR N3300 and DESMODUR (registered trademark) N3600, N3900, and Z4470BA (Sumika Bayer Urethane Co., Ltd.), CORONATE (registered trademark) HX and HK (Nippon Polyurethane Industry Co., Ltd.), and DURANATE (registered trademark) TPA-100, TKA-100, TSA-100, TSS-100, TLA-100, and TSE-100 (Asahi Kasei Corporation.).

Examples of a commercially available product of the biuret type tri- or higher functional isocyanate compound include TAKENATE (registered trademark) D-165N and NP1100 (Mitsui Chemicals, Inc.), DESMODUR (registered trademark) N3200 (sumika Bayer Urethane Co., Ltd.), and DURANATE (registered trademark) 24A-100 (Asahi Kasei Corporation.).

At least one of the isocyanate compounds as the raw material compound may be an isocyanate compound containing a hydrophilic group. For the isocyanate compound containing a hydrophilic group, descriptions described in paragraphs 0112 to 0118 and paragraphs 0252 to 0254 of WO2016/052053A can be referred to.

At least one of the isocyanate compounds as the raw material compound may be an isocyanate compound containing a polymerizable group. For the isocyanate compound containing a polymerizable group, paragraphs 0084 to 0089, 0203, and 0205 of WO2016/052053A can be referred to.

-Compound containing active hydrogen group-

The compound containing an active hydrogen group is preferably a compound containing two or more active hydrogen groups.

As the compound containing two or more active hydrogen groups, a polyol compound (that is, a compound having two or more hydroxy groups) or a polyamine compound (that is, a compound having two or more amino groups) is more preferable.

**In** a case where the compound containing an active hydrogen group and a hydrophilic group is used as the raw material compound, the polymer P preferably has at least one of the following structural units (P0).

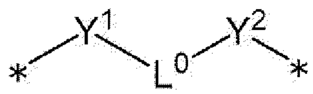

(P0)

In the structural unit (P0), $L^0$ represents a divalent organic group, $Y^1$ and $Y^2$ each independently represent an oxygen atom, a sulfur atom, or a $-NR^1-$ group, $R^1$ represents a hydrogen atom or a hydrocarbon group having 1 to 10 carbon atoms, and * represents a bonding position.

In the structural unit (P0), the divalent organic group represented by $L^0$ may be a group consisting of a carbon atom and a hydrogen atom or a group having a carbon atom, a hydrogen atom, and a heteroatom (such as an oxygen atom, a nitrogen atom, or a sulfur atom).

The divalent organic group represented by $L^0$ may include at least one of a hydrophilic group or a polymerizable group.

Specific examples of $L^0$ include a residue obtained by removing two active hydrogen groups from specific examples of a compound containing two or more active hydrogen groups, which will be described later.

$R^1$ is preferably a hydrogen atom or a hydrocarbon group having 1 to 6 carbon atoms, and more preferably a hydrogen atom or a hydrocarbon group having 1 to 3 carbon atoms.

$Y^1$ and $Y^2$ are each independently preferably an oxygen atom or a $-NR^1-$ group, and more preferably an oxygen atom.

Specific examples of the diol compound as the compound containing an active hydrogen group are shown below,

but the compound containing an active hydrogen group is not limited to the following specific examples.

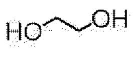
(1)

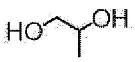
(2)

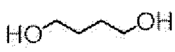
(3)

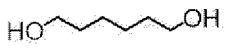
(4)

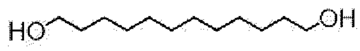
(5)

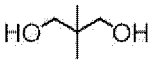
(6)

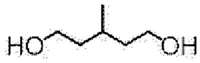
(7)

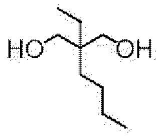
(8)

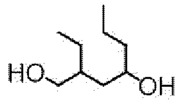
(9)

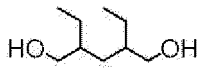
(10)

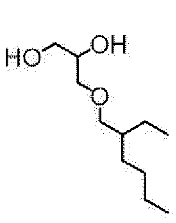
(11)

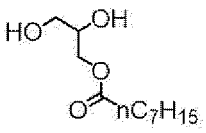
(12)

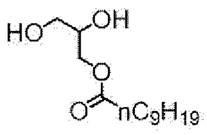
(13)

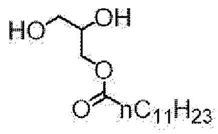
(14)

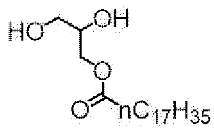
(15)

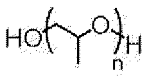
(16)
PPG

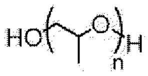
(16-2)
PEG

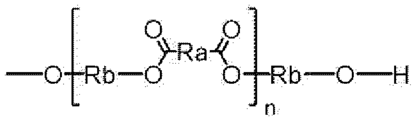
(17)
PEs

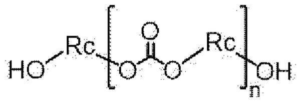
(18)
PCD

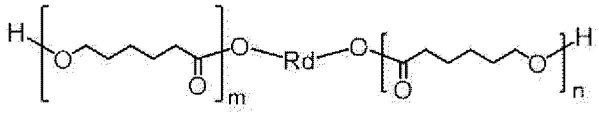
(19)
PCL

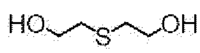
(20)

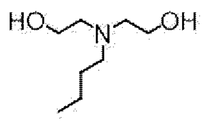
(21)

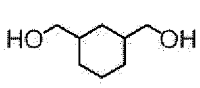
(22)

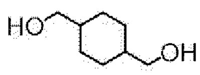
(23)

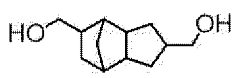
(24)

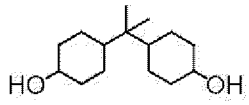
(25)

Among the compounds (12) to (15), $nC_7H_{15}$, $nC_9H_{19}$, $nC_{11}H_{23}$, and $nC_{17}H_{35}$ each represent a normal heptyl group, a normal nonyl group, a normal undecyl group, or a normal heptadecyl group.

The compound (16) PPG is polypropylene glycol, and n represents a repetition number.

The compound (16-2) PEG is polyethylene glycol, and n represents a repetition number.

The compound (17) PEs is a polyester diol, n represents a repetition number, and Ra and two Rb's each independently represent a divalent hydrocarbon group having 2 to 25 carbon atoms. n pieces of Ra's in the compound (17) PEs may be the same or different from each other. (n + 1) pieces of Rb's in the compound (17) PEs may be the same or different from each other.

The compound (18) PCD is a polycarbonate diol, n represents a repetition number, and (n + 1) pieces of Rc's each independently represent an alkylene group having 2 to 12 carbon atoms (preferably 3 to 8 carbon atoms and more

preferably 3 to 6 carbon atoms). (n + 1) pieces of Rc's in the compound (18) PCD may be the same or different from each other.

The compound (19) PCL is a polycaprolactone diol, n and m each represent a repetition number, and Rd represents an alkylene group having 2 to 25 carbon atoms.

-Compound containing active hydrogen group and polymerizable group-

Examples of the compound containing an active hydrogen group also include a compound containing an active hydrogen group and a polymerizable group.

The compound containing an active hydrogen group and a polymerizable group is suitable as a compound for introducing a polymerizable group into the polymer P (hereinafter, also referred to as "compound for introducing a polymerizable group").

Specific examples of a diol compound as the compound containing an active hydrogen group and a polymerizable group are shown below, but the compound containing an active hydrogen group and a polymerizable group is not limited to the following specific examples.

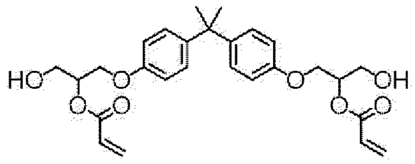

(26)

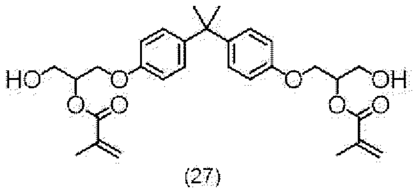

(27)

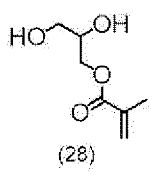

(28)

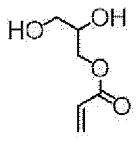

(29)

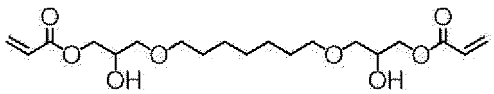

(30)

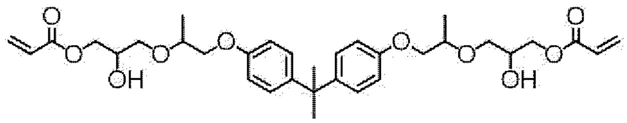

(31)
DA-250

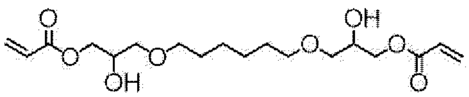

(32)

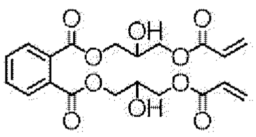

(33)
DA-721

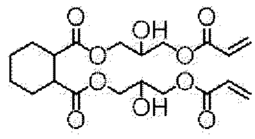

(34)
DA-722

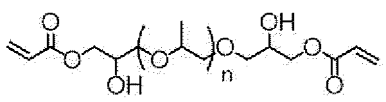

n=1
(35)
DA-911M

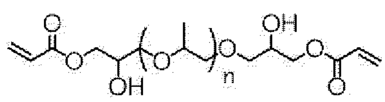

(36) n=3
DA-920

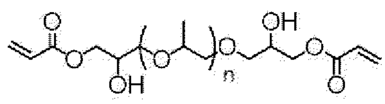

n=11
(37)
DA-931

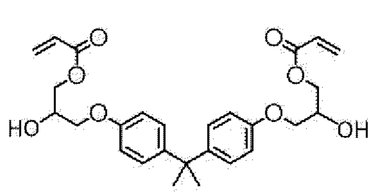

(38)

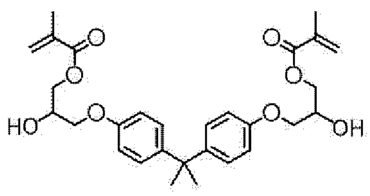

(39)

For the compound containing an active hydrogen group and a polymerizable group, description in paragraphs

0075 to 0089 of WO2016/052053A may be appropriately referred to.

-Compound containing active hydrogen group and hydrophilic group-

Examples of the compound containing an active hydrogen group also include a compound containing an active hydrogen group and a hydrophilic group.

The compound containing an active hydrogen group and a hydrophilic group is suitable as a compound for introducing a hydrophilic group into the polymer P (hereinafter, also referred to as "compound for introducing a hydrophilic group").

The polymer P in a case where the compound containing an active hydrogen group and a hydrophilic group is used as the raw material compound preferably has the following structural unit (P2).

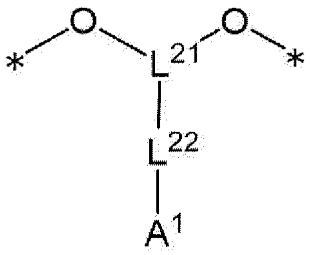

(P2)

In the structural unit (P2), $L^{21}$ represents a trivalent organic group having 1 to 20 carbon atoms, $L^{22}$ represents a single bond or a divalent organic group having 1 to 20 carbon atoms, $A^1$ represents a carboxy group, a salt of the carboxy group, a sulfo group, or a salt of the sulfo group, and * represents a bonding position.

The number of carbon atoms in the trivalent organic group having 1 to 20 carbon atoms, represented by $L^{21}$, is preferably 2 to 20, more preferably 3 to 20, and still more preferably 4 to 20.

As the trivalent organic group represented by $L^{21}$, a trivalent hydrocarbon group or a group in which at least one carbon atom in the trivalent hydrocarbon group is replaced with a heteroatom (preferably, an oxygen atom, a sulfur atom, or a nitrogen atom) is preferable.

The number of carbon atoms in the divalent organic group having 1 to 20 carbon atoms, represented by $L^{22}$, is preferably 1 to 10 and more preferably 1 to 6.

As the divalent organic group represented by $L^{22}$, a divalent hydrocarbon group (preferably an alkylene group) or a group in which at least one carbon atom in a divalent hydrocarbon group (preferably an alkylene group) is replaced with an oxygen atom or a sulfur atom (preferably an oxygen atom) is preferable.

$L^{22}$ may be a single bond.

Specific examples of the compound containing an active hydrogen group and a hydrophilic group are shown below, but the compound containing an active hydrogen group and a hydrophilic group is not limited to the following specific examples. Each of the carboxy group and the sulfo group in the following specific examples may be neutralized (that is, it may be a salt of a carboxy group or a salt of a sulfo group).

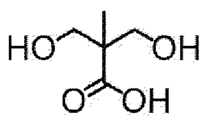

DMPA

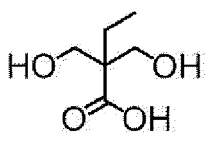

DMBA

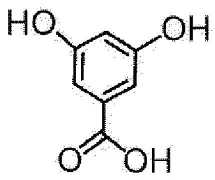

DHBA

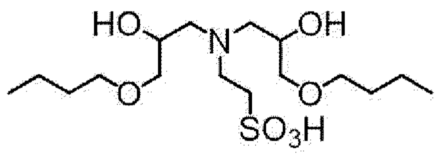

DSO

For the compound containing an active hydrogen group and a hydrophilic group, description in paragraphs 0112 to 0118 and paragraphs 0252 to 0254 of WO2016/052053A can be appropriately referred to.

A content of the polymer P is preferably 10% by mass to 90% by mass, more preferably 20% by mass to 80% by mass, still more preferably 30% by mass to 70% by mass, and even more preferably 40% by mass to 60% by mass with respect to the total solid content of the specific particles.

In the present disclosure, the total solid content of the specific particles means the total amount of the specific particles excluding the solvent (that is, water and an organic solvent). In a case where the specific particles do not contain a

solvent, the total solid content of the specific particles matches the total amount of the specific particles.

The content of the polymer P is preferably 0.3% by mass to 20% by mass, more preferably 0.5% by mass to 15% by mass, and still more preferably 1% by mass to 10% by mass with respect to the total amount of the ink.

From the viewpoint of storage stability of the ink, a ratio of the content of the polymerizable compound A to the total content of the polymer P and the polymerizable compound A is preferably 0.3 to 0.7 and more preferably 0.4 to 0.6. In a case where the ratio is within the above-described range, the function of the polymer P (function of retaining the polymerizable compound A in the specific particles; in other words, function of suppressing bleeding out of the polymerizable compound A from the specific particles) is more effectively exhibited.

(Radical polymerization initiator)

It is preferable that the specific particles contain at least one radical polymerization initiator.

In the present disclosure, the radical polymerization initiator means a compound which absorbs light to generate a radical.

In a case where the specific particles contain a radical polymerization initiator, the rub resistance and the adhesiveness of the ink film are further improved.

The reason for this is considered to be that a distance between the polymerizable compound A and the radical polymerization initiator is shortened, and a curing sensitivity (hereinafter, also simply referred to as "sensitivity") of the ink film is improved.

In addition, in a case where the specific particles contain a radical polymerization initiator, a radical polymerization initiator (for example, a radical polymerization initiator having a solubility in water at 25°C of 1.0% by mass or less) which is highly sensitive but difficult to use due to low dispersibility or low solubility in water can be used. As a result, a range of selection of the radical polymerization initiator to be used is widened, and a range of selection of the light source to be used is also widened. Therefore, the curing sensitivity can be improved as compared with the related art.

Specific examples of the radical polymerization initiator which is highly sensitive but difficult to use due to low dispersibility or low solubility in water include a carbonyl compound and an acylphosphine oxide compound described later, and an acylphosphine oxide compound is preferable.

The radical polymerization initiator can be contained in the ink by containing, in the specific particles, the radical polymerization initiator having low solubility in water.

In addition, the ink in which the specific particles contain a radical polymerization initiator is more excellent in storage stability than the photocurable composition in the related art. The reason for this is considered to be that the radical polymerization initiator is contained in the specific particles, and thus aggregation or sedimentation of the radical polymerization initiator is suppressed.

As the radical polymerization initiator, for example, description in paragraphs 0091 to 0094 of WO2016/052053A can be appropriately referred to.

As the radical polymerization initiator, (a) a carbonyl compound such as an aromatic ketone or (b) an acylphosphine oxide compound is preferable. Examples of the radical polymerization initiator include bis(2,4,6-trimethylbenzoyl)-phenylphosphine oxide (for example, product name "Omnirad 819", manufactured by IGM Resins B.V), 2-(dimethylamine)-1-(4-morpholinophenyl)-2-benzyl-1-butanone (for example, product name "Omnirad 369", manufactured by IGM Resins B.V), 2-methyl-1-(4-methylthiophenyl)-2-morpholinopropan-1-one (for example, product name "Omnirad 907", manufactured by IGM Resins B.V.), 1-hydroxy-cyclohexyl-phenyl-ketone (product name "Omnirad 184", manufactured by IGM Resins B.V.), 2,4,6-trimethylbenzoyl-diphenyl-phosphine oxide (for example, product name "Omnirad TPO-H", manufactured by IGM Resins B.V), and (2,4,6-trimethylbenzoyl)ethoxyphenylphosphine oxide (for example, product name "Omnirad TPO-L", manufactured by IGM Resins B.V.).

Among these, from the viewpoint of improving sensitivity and the viewpoint of suitability for LED light, the radical polymerization initiator is preferably (b) the acylphosphine oxide compound, and more preferably a monoacylphosphine oxide compound or a bisacylphosphine oxide compound.

A wavelength of the LED light is preferably 355 nm, 365 nm, 385 nm, 395 nm, or 405 nm.

The specific particles in the aspect of containing the polymerization initiator can be produced, for example, by emulsifying a mixture obtained by mixing an oil-phase component containing the polymer P (or the raw material compound for producing the polymer P), the polymerizable compound A, and the polymerization initiator, and a water-phase component.

A content of the radical polymerization initiator is preferably 0.1% by mass to 15% by mass, more preferably 0.5% by mass to 10% by mass, and still more preferably 1% by mass to 6% by mass with respect to the total solid content of the specific particles.

The content of the radical polymerization initiator is preferably 0.1% by mass to 3.0% by mass, more preferably 0.3% by mass to 2.0% by mass, and still more preferably 0.5% by mass to 1.5% by mass with respect to the total amount of the ink.

(Sensitizer)

It is preferable that the specific particles contain at least one sensitizer.
In a case where the specific particles contain a photopolymerization initiator, the specific particles preferably contain a sensitizer.
In a case where the specific particles contain a sensitizer, decomposition of the photopolymerization initiator by the irradiation with active energy rays can be further promoted.
The sensitizer is a substance which is electronically excited by absorbing specific active energy rays. The electronically excited sensitizer comes into contact with the photopolymerization initiator and causes actions such as electron migration, energy transfer, and heat generation. In this manner, chemical change in the photopolymerization initiator, that is, decomposition, or generation of radicals, acid, and base is promoted.
Examples of the sensitizer include benzophenone, thioxanthone, isopropylthioxanthone, anthraquinone, a 3-acylcoumarin derivative, terphenyl, styrylketone, 3-(aroylmethylene)thiazoline, camphorquinone, eosin, rhodamine, and erythrosine.
In addition, as the sensitizer, a compound represented by General Formula (i) described in JP2010-24276A, a compound represented by General Formula (I) described in JP1994-107718A (JP-H6-107718A), and the like can also be suitably used.
Among these, as the sensitizer, from the viewpoint of suitability for LED light and reactivity with the photopolymerization initiator, at least one selected from thioxanthone, isopropylthioxanthone, or benzophenone is preferable; at least one selected from thioxanthone or isopropylthioxanthone is more preferable; and isopropylthioxanthone is still more preferable.
In a case where the specific particles contain a sensitizer, a content of the sensitizer is preferably 0.1% by mass to 20% by mass, more preferably 0.2% by mass to 15% by mass, and still more preferably 0.3% by mass to 10% by mass with respect to the solid content of the specific particles.
The content of the sensitizer is preferably 0.01% by mass to 0.5% by mass, more preferably 0.05% by mass to 0.3% by mass, and still more preferably 0.1% by mass to 0.2% by mass with respect to the total amount of the ink.
The specific particles in the aspect of containing the polymerization initiator and the sensitizer can be produced, for example, by emulsifying a mixture obtained by mixing an oil-phase component containing the polymer P (or the raw material compound for producing the polymer P), the polymerizable compound A, the photopolymerization initiator, and the sensitizer, and a water-phase component.

(Other components)

The specific particles may contain a component other than the above-described components.
Examples of other components include a compound containing at least one selected from the group consisting of a polysiloxane bond (that is, a divalent polysiloxane group), a monovalent polysiloxane group, a monovalent fluorinated hydrocarbon group, and a divalent fluorinated hydrocarbon group.

(Method for producing water dispersion of specific particles)

The ink according to the present disclosure can be manufactured by producing a water dispersion of the specific particles containing the specific particles and water described above, and adding other components to the obtained water dispersion as necessary.
In addition, since the ink according to the present disclosure is one form of the water dispersion of the specific particles, the ink can also be directly manufactured as the water dispersion of the specific particles (that is, without adding other components) depending on the formulation of the ink.
The method for producing the water dispersion of the specific particles is not particularly limited.
Examples of the method for producing the water dispersion of the specific particles include the following production methods A and B.

-Production method A-

The production method A includes a step of mixing and emulsifying an oil-phase component including an organic solvent, the polymer P, and a polymerizable monomer, and a water-phase component including water to obtain the water dispersion of the specific particles.
The production method A is suitable as a method for producing a water dispersion of the specific particles containing the polymer P in an aspect of the chain-like polymer.
For the production method A, known documents such as JP6584677B can be referred to.

-Production method B-

The production method B includes a step of mixing and emulsifying an oil-phase component including an organic solvent, the raw material compound of the polymer P (for example, the tri- or higher functional isocyanate compound, the compound having two or more active hydrogen groups, and the like), and a polymerizable monomer, and a water-phase component including water to obtain the water dispersion of the specific particles.
The production method B is suitable as a method for producing a water dispersion of the specific particles (for example, microcapsules) containing the polymer P in an aspect of the crosslinked polymer.
For the production method B, known documents such as WO2016/052053A can be referred to.

<Organic solvent>

The ink preferably contains at least one organic solvent (preferably a water-soluble organic solvent).
**In** this manner, the j ettability of the ink from the ink jet head is further secured.
In the present disclosure, "water-soluble" in the "water-soluble organic solvent" means a property of being dissolved in 1 g or more in 100 g of water at 25°C.
The amount of the water-soluble organic solvent dissolved in 100 g of water at 25°C is preferably 5 g or more, and more preferably 10 g or more.
A content of the water-soluble organic solvent is preferably 1% by mass to 35% by mass, more preferably 3% by mass to 30% by mass, still more preferably 5% by mass to 20% by mass, and even more preferably 7% by mass to 15% by mass with respect to the total amount of the ink.
In a case where the content of the water-soluble organic solvent is 1% by mass or more, the jettability of the ink is further improved.
In a case where the content of the water-soluble organic solvent is 35% by mass or less, the storage stability of the ink is further improved.
Specific examples of the water-soluble organic solvent are as follows:

· Alcohols (for example, methanol, ethanol, propanol, isopropanol, butanol, isobutanol, secondary butanol, tertiary butanol, pentanol, hexanol, cyclohexanol, and benzyl alcohol)
· Polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, and 2-methylpropanediol)
· Polyhydric alcohol ethers (for example, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, and propylene glycol monophenyl ether)
Amines (for example, ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine)
Amides (for example, formamide, N,N-dimethylformamide, and N,N-dimethylacetamide)
· Heterocyclic rings (for example, 2-pyrrolidone, N-methyl-2-pyrrolidone, cyclohexylpyrrolidone, 2-oxazolidone, 1,3-dimethyl-2-imidazolidinone, and γ-butyrolactone)
· Sulfoxides (for example, dimethyl sulfoxide)
· Sulfones (for example, sulfolane)
· Others (urea, acetonitrile, acetone, and the like)

<Coloring material>

The ink may be an ink containing at least one coloring material (so-called "colored ink") or an ink not containing a coloring material (so-called "clear ink").
In a case where the ink contains a coloring material, it is preferable that the coloring material is contained outside the specific particles (that is, the specific particles do not contain the coloring material).
The coloring material is not particularly limited, and can be optionally selected from known coloring materials such as a pigment, a water-soluble dye, and a dispersed dye. Among these, from the viewpoint of excellent weather fastness and rich color reproducibility, the coloring material is more preferably a pigment.
The pigment is not particularly limited, and can be appropriately selected according to the purpose; and examples

thereof include known organic pigments and inorganic pigments. In addition, examples of the pigment also include resin particles dyed with a dye, a commercially available pigment dispersion, and a surface-treated pigment (for example, a pigment dispersed in water, a liquid compound, an insoluble resin, or the like as a dispersion medium, and a pigment surface-treated with a resin, a pigment derivative, or the like).

Examples of the organic pigment and the inorganic pigment include a yellow pigment, a red pigment, a magenta pigment, a blue pigment, a cyan pigment, a green pigment, an orange pigment, a violet pigment, a brown pigment, a black pigment, and a white pigment.

In a case where the pigment is used as the coloring material, a pigment dispersing agent may be used as necessary.

In addition, in a case where the pigment is used as the coloring material, a self-dispersing pigment having a hydrophilic group on a surface of pigment particles may be used as the pigment.

For the coloring material and the pigment dispersing agent, descriptions in paragraphs 0180 to 0200 of JP2014-040529A and paragraphs 0122 to 0129 of WO2016/052053A can be appropriately referred to.

In a case where the ink contains a coloring material, a content of the coloring material is preferably 0.1% by mass to 20% by mass, more preferably 0.5% by mass to 10% by mass, and particularly preferably 0.5% by mass to 5% by mass with respect to the total amount of the ink.

<Other components>

The ink may contain other components in addition to the components described above as necessary.

The other components may be contained in the specific particles or may not be contained in the specific particles.

The ink may contain a surfactant, a polymerization inhibitor, an ultraviolet absorber, and the like as the other components.

In addition, the ink may contain a water-soluble polymerizable monomer, a water-soluble photopolymerization initiator, a water-soluble resin, and the like outside the specific particles as necessary.

For these components, for example, paragraphs 0134 to 0157 of WO2016/052053A can be referred to.

(Preferred method for producing ink)

The method for producing the ink is not particularly limited, but is preferably an aspect including a step of producing the water dispersion of the specific particles by the above-described method of producing the water dispersion (the production method A or the production method B) and a step of adding and mixing other components such as the pigment and the water-soluble organic solvent with the water dispersion of the specific particles.

In addition, as another aspect of the method for producing the ink, an aspect of directly producing the ink as the water dispersion of the specific particles (that is, a method of not adding the other components to the water dispersion of specific particles) by the step of producing the water dispersion of the specific particles by the above-described method of producing the water dispersion (the production method A or the production method B) is also exemplified.

(Preferred physical properties of ink)

A viscosity of the ink at 25°C is preferably 3 mPa·s to 15 mPa·s and more preferably 3 mPa·s to 13 mPa·s. In a case where the viscosity of the ink is within the above-described range, higher jetting stability can be achieved.

The viscosity of the ink is a value measured using a viscometer.

As the viscometer, for example, VISCOMETER TV-22 (manufactured by Toki Sangyo Co., Ltd.) can be used.

[Ink jet recording method]

It is preferable that the ink jet recording method according to the present disclosure uses the ink jet recording apparatus according to the present disclosure and the above-described ink, the ink jet recording method including a step (hereinafter, heating step) of heating a surface of the base material opposite to a surface on which the ink is to be landed, a step (hereinafter, also referred to as "jetting step") of jetting the ink onto the base material, and a step (hereinafter, also referred to as "irradiating step") of irradiating the surface of the base material on which the ink is landed with an active energy ray.

Hereinafter, the operation of irradiating with an active energy ray may be referred to as "exposure".

In the ink jet recording method according to the present disclosure, since the ink jet recording apparatus according to the present disclosure is used, the same effect as the effect obtained by the ink jet recording apparatus according to the present disclosure is exhibited.

Since the ink used in the ink jet recording method according to the present disclosure is the same as the ink used

in the ink jet recording apparatus according to the present disclosure, the description thereof is not described.

In the ink jet recording method according to the present disclosure, it is preferable that the ink contains an organic solvent.

It is preferable that a content of water in the ink which has landed on the base material immediately before a timing of the irradiation with an active energy ray is 5% by mass or less with respect to a content of water immediately before a timing when the ink has landed on the base material, and a content of the organic solvent in the ink which has landed on the base material immediately before the timing of the irradiation with an active energy ray is 30% by mass or more with respect to a content of the organic solvent immediately before the timing when the ink has landed on the base material.

In other words, immediately before the timing of the irradiation with an active energy ray, it is preferable that the ink has a state in which, immediately before the timing when the ink has landed on the base material, water in the ink is not left much and the organic solvent is left to some extent. In a case where the residual states of water and the organic solvent are in the above-described states, bleeding out of the polymerizable compound A from the specific particles is promoted, the subsequent polymerization reaction is likely to proceed, and thus the image quality, rub resistance, and stretchability of the image to be obtained are further improved.

Hereinafter, a proportion of the content of water immediately before the timing of the irradiation with an active energy ray to the content of water immediately before the timing when the ink has landed on the base material will be referred to as "residual proportion of water"; and a proportion of the content of the organic solvent immediately before the timing of the irradiation with an active energy ray to the content of the organic solvent immediately before the timing when the ink has landed on the base material will be referred to as "residual proportion of the organic solvent".

The lower limit value of the residual proportion of water is not particularly limited, and may be 0% by mass.

The upper limit value of the residual proportion of the organic solvent is preferably 80% by mass.

The residual proportion of water and the residual proportion of the organic solvent are calculated using the following method.

Immediately before the timing of the irradiation with an active energy ray, the ink jet recording apparatus is stopped, and a measurement sample of 25 mm × 30 mm is cut out.

-Residual proportion of water-

A moisture content B1 (mg/$m^2$) of the measurement sample is measured by a moisture vaporization method using a trace moisture content measurement device (product name "CA-200", manufactured by Mitsubishi Chemical Analytech Co., Ltd.). The moisture vaporization temperature is set to 140°C; a coulometric titration reagent (product name, "AQUAMICRON AKX", manufactured by Mitsubishi Chemical Corporation) is used as an anolyte; and a coulometric titration reagent (product name, "AQUAMICRON CxU", manufactured by Mitsubishi Chemical Corporation) is used as a catholyte.

Separately, a moisture content B2 (mg/$m^2$) of the base material before the ink jet recording is measured by the same method as the moisture content B1.

"B1 - B2" means the mass (mg/$m^2$) of water per unit area in the ink which has landed on the base material immediately before the timing of the irradiation with an active energy ray.

In addition, a content of the polymerizable compound A contained in the measurement sample is measured using a high performance liquid chromatograph (product name "Prominence (liquid feeding unit: LC-20AT, detector: SPD-M20A)", manufactured by Shimadzu Corporation).

A ratio of the content of the polymerizable compound A and the content of water is calculated from the ink filled in the ink cartridge. Using the mass of the polymerizable compound A contained in the measurement sample per unit area and the above-described ratio, a mass A (mg/$m^2$) of water per unit area in the ink which has landed on the base material immediately before the timing when the ink has landed is calculated. The residual proportion of water is calculated based on the following expression.

$$\text{Residual proportion of water (\% by mass)} = \{(B1 - B2)/A\} \times 100$$

-Residual proportion of organic solvent-

1 mL of methanol is used to extract the organic solvent contained in the ink which has landed on the base material, at 25°C for 24 hours from the surface of the measurement sample on which the ink has landed. Using the obtained extraction solution, a mass C (mg/$m^2$) of the organic solvent per unit area in the ink landed on the base material immediately before the timing of the irradiation with an active energy ray is measured using a gas chromatograph (product name "GC-2010", manufactured by Shimadzu Corporation).

In addition, a content of the polymerizable compound A contained in the measurement sample is measured using

a high performance liquid chromatograph (product name "Prominence (liquid feeding unit: LC-20AT, detector: SPD-M20A)", manufactured by Shimadzu Corporation).

A ratio of the content of the polymerizable compound A and the content of the organic solvent is calculated from the ink filled in the ink cartridge or the ink bottle. Using the mass of the polymerizable compound A contained in the measurement sample per unit area and the above-described ratio, a mass D ($mg/m^2$) of the organic solvent per unit area in the ink which has landed on the base material immediately before the timing when the ink has landed is calculated. The residual proportion of the organic solvent is calculated based on the following expression.

$$\text{Residual proportion of organic solvent (\% by mass)} = (C/D) \times 100$$

<Heating step>

The heating step is a step of heating the surface of the base material opposite to the surface on which the ink is to be landed. For example, the surface of the base material opposite to the surface on which the ink is to be landed is heated by a platen disposed below the base material.

The base material may be heated in advance before the ink is landed, may be heated immediately before the timing when the ink is landed, may be heated after the ink is landed, or may be a combination thereof.

From the viewpoint of promoting the bleeding out of the polymerizable compound A, it is preferable that the base material is heated in advance before the ink is landed, and it is more preferable that the base material is heated in advance before the ink is landed and is also heated immediately before the timing when the ink is landed.

A heating temperature is preferably 35°C to 60°C and more preferably 40°C to 50°C.

<Jetting step>

The jetting step is a step of jetting the above-described ink onto the base material.

The ink is jetted by an ink jet recording system using the ink jet recording apparatus according to the present disclosure.

A resolution of the ink jet head is preferably 300 dpi or more, more preferably 600 dpi or more, and still more preferably 800 dpi or more.

Here, the dpi (dot per inch) represents the number of dots per 2.54 cm (1 inch).

A liquid droplet volume (amount jetted per dot) of the ink jetted from the ink jet head is preferably 1 pL (picoliter) to 100 pL, more preferably 3 pL to 80 pL, and still more preferably 3 pL to 50 pL.

It is preferable that the ink jet recording method according to the present disclosure includes a blowing step of blowing a gas to the jetted ink after the jetting step. By blowing a gas, the drying of the ink is further advanced, and the image quality and the rub resistance of the image are further improved.

A temperature of the gas to be blown is, for example, 20°C to 60°C.

The blowing of the gas to the applied ink can be performed, for example, using the blower provided in the ink jet recording apparatus according to the present disclosure.

<Irradiating step>

The irradiating step is a step of irradiating the surface of the base material on which the ink is landed with an active energy ray (in other words, a step of exposing the ink jetted onto the base material to light).

By the irradiation (that is, the exposure) with active energy rays in the present step, the polymerizable compound A in the ink is polymerized and the ink is cured, thereby obtaining an image. More specifically, as described above, after the ink is landed, the polymerizable compound A effectively bleeds out from the specific particles, and thus the curing between the specific particles (that is, the linking between the specific particles) sufficiently proceeds, and as a result, an image with excellent image quality and rub resistance is obtained.

The irradiation of the ink jetted onto the base material with active energy rays may be performed in a state in which the base material and the ink jetted onto the base material are heated. In addition, the irradiation of the ink jetted onto the base material with active energy rays may be performed in a state in which the base material and the ink jetted onto the base material are heated and a gas is blown to the ink jetted onto the base material by a blower.

An irradiation energy (that is, an exposure amount) of the active energy ray is preferably 20 $mJ/cm^2$ or more, more preferably 100 $mJ/cm^2$ or more, and still more preferably 500 $mJ/cm^2$ or more.

The upper limit value of the exposure amount is not particularly limited, and may be 5 $J/cm^2$ or 1,500 $mJ/cm^2$.

In addition, the irradiating step may include a step of temporarily curing the ink with a relatively small exposure amount, and a step of fully curing the ink with a relatively large exposure amount. The exposure amount in a case of

temporarily curing the ink is preferably 50 mJ/cm$^2$ to 500 mJ/cm$^2$ and more preferably 100 mJ/cm$^2$ to 300 mJ/cm$^2$.

Examples

Hereinafter, the present invention will be described more specifically with reference to examples, but the present invention is not limited to the following examples.

Unless otherwise specified, "room temperature" represents 25°C.

<Preparation of polymer P>

187.9 g of methyl ethyl ketone, 137.4 g of isophorone diisocyanate, 32.3 g of tricyclodecane dimethanol, 91.8 g of epoxy acrylate (product name "EBECRYL 600", manufactured by Daicel-Allnex Ltd.), 28.8 g of 2,2-bis(hydroxymethyl) propionic acid, 25.3 g of a hydroxy group-containing silicone compound (product name "SILAPLANE FM-DA11", manufactured by JNC Corporation.), and 0.01 g of 2-tert-butyl-1,4-benzoquinone were charged into a 1 L three-neck flask equipped with a stirrer, a thermometer, and a reflux condenser, the temperature was raised to 70°C, and 0.5 g of bismuth tris(2-ethylhexanoate) (product name "NEOSTANN U-600", manufactured by Daicel-Allnex Ltd.) was added thereto. Thereafter, the mixture was stirred for 8 hours while maintaining a temperature in the reaction container at 70°C.

Next, a solution consisting of 64.4 g of methyl ethyl ketone and 221.1 g of 2-propanol was added to the reaction container, and the mixture was stirred for 2 hours. Thereafter, the temperature was lowered to 40°C, and 27.8 g of N,N-diisopropylethylamine was added thereto. Stirring was carried out for 1 hour while maintaining a temperature in the reaction container at 40°C, thereby obtaining a polymer P solution (content of polymer P: 40% by mass).

[Example 1]

<Preparation of water dispersion of specific particles>

-Preparation of oil-phase component-

The following components were mixed and stirred at room temperature for 30 minutes to obtain an oil-phase component.

| | |
|---|---|
| 40% by mass solution of polymer P | 38.7 g |
| Polymerizable compound A: product name "MIRAMER SC2153", manufactured by Miwon Specialty Chemical Co., Ltd.; 70% by mass of decafunctional urethane acrylate and 30% by mass of DPHA | 15.5 g |
| Polymerization initiator: (2,4,6-trimethylbenzoyl)ethoxyphenylphosphine oxide (product name "Omnirad TPO-L", manufactured by IGM Resins B.V.) | 2.5 g |
| Sensitizer: isopropylthioxanthone (ITX) | 0.6 g |
| Ethyl acetate | 31.7 g |
| Methyl ethyl ketone | 9.4 g |

... ... ... ...

-Preparation of water dispersion of specific particles-

The above-described oil-phase component and 84.6 g of distilled water were mixed, and the obtained mixture was emulsified at 7,000 rpm for 30 minutes using a homogenizer at room temperature to obtain an emulsion.

The obtained emulsion was added to distilled water (30.0 g), and the obtained liquid was heated to 50°C and stirred at 50°C for 4 hours to distill off ethyl acetate and methyl ethyl ketone from the liquid.

The liquid from which the ethyl acetate and methyl ethyl ketone had been distilled off was diluted with distilled water so that a concentration of solid contents was 25% by mass, thereby obtaining a water dispersion of specific particles (content of specific particles: 25% by mass).

A volume average dispersion particle diameter of the specific particles was 100 nm.

<Preparation of ink>

Each component was mixed to prepare an ink.

· Water dispersion of specific particles described above (content of specific particles: 25% by mass) ... 44 parts by mass
· Pigment dispersion liquid: product name "Pro-jet Black APD4000", manufactured by FUJIFILM Imaging Colorants Inc.; pigment concentration: 15% by mass, dispersing agent concentration: 6% by mass ... 20 parts by mass
· Surfactant: product name "EMULGEN 707", manufactured by Kao Corporation; concentration of solid contents: 100% by mass) ... 1.0 part by mass
· Surfactant: product name "SURFYNOL 440", manufactured by Evonik Japan Co., Ltd.; concentration of solid contents: 100% by mass) ... 1.0 part by mass
· Surfactant: product name "TEGO Wet 270", manufactured by Evonik Japan Co., Ltd.; concentration of solid contents: 100% by mass) ... 1.0 part by mass
· Water ... remaining amount such that total amount of the ink reached 100 parts by mass

[Examples 2 to 15 and Comparative Examples 1 and 2]

A water dispersion of specific particles was prepared in the same manner as in Example 1 such that the content of each component contained in the ink was as shown in Tables 1 and 2, and an ink was obtained in the same manner as in Example 1.

<Image recording>

An ink jet recording apparatus of a multi-pass method (that is, a shuttle scan method) was prepared as shown in Fig. 1. The distance X1 shown in Fig. 6 was adjusted to be the values shown in Table 1 and Table 2. A transport roller for transporting the base material was installed, and the platens 26A, 26B, and 26C were provided below the transport roller. The ink jet head shown in Fig. 3 was used as an ink jet head. In Examples 4 to 15 and Comparative Examples 1 and 2, the blower 33A was installed above the ink jet head. The blower 33A was disposed at an angle such that wind with a wind speed of 1.0 m/sec flowed to the outlet side in the transport direction.
The scanning speed of the ink jet head was set to 1,000 mm/sec, and the scanning distance per time of the ink jet head was set to 1,700 mm.
An ink cartridge attached to the ink jet recording apparatus was filled with the above-described ink, and an image was recorded on a base material by the following method.
A polyvinyl chloride (PVC) film (product name "LAG JET P-282ZW", thickness: 80 μm, manufactured by LINTEC Corporation) was used as the base material.
The temperature of the platen 26A in Fig. 2 was set to the heating temperature shown in Tables 1 and 2.
The heated base material was transported, and the ink was jetted onto the heated base material from the ink jet head of the above-described ink jet recording apparatus. The ink was jetted under the conditions of 900 dpi (dots per inch) at 10 pL per dot, 8 passes, and bidirectional printing.
The temperature of the platen 26B in Fig. 2 was set to the heating temperature shown in Tables 1 and 2, the ink was jetted while the base material was heated, and the ink was jetted while blowing a gas from the blower installed above the ink jet head.
The base material on which the ink had landed was exposed to light using the light sources 34A and 34B so that the exposure amount was 1,000 mJ/cm$^2$, thereby obtaining an image recorded material. The exposure was carried out while heating the base material and blowing a gas from the blower.
In Examples 1 to 3, since the blower was not installed, the blowing of the gas was not carried out in the jetting of the ink and the exposure.
Using the obtained image recorded material, image quality, rub resistance, and stretchability were evaluated. In addition, jettability in the image recording was evaluated. The evaluation methods were as follows.

<Image quality>

Using the above-described ink stored at room temperature for 1 day or less after the preparation, a character image shown in Fig. 8 was recorded in each of sizes of 5 points, 6 points, and 7 points under the above-described conditions of the image recording.
The character images of each size were observed using a 10x magnifying loupe (manufactured by ETSUMI Photo&Digital Accessories). Based on the observed results, accuracy of the image was evaluated according to the following evaluation standard. The evaluation standard was as follows. A, B, and C are levels which do not cause any problems in practical use.

A: character image shown in Fig. 8, having a size of 5 points, was formed without collapse and blurring.

B: character image shown in Fig. 8, having a size of 6 points, was formed without collapse and blurring (excluding the case corresponding to A).

C: character image shown in Fig. 8, having a size of 7 points, was formed without collapse and blurring (excluding the case corresponding to A and B).

D: character image shown in Fig. 8, having a size of 7 points, was formed by being crushed or blurred.

<Rub resistance>

By the above-described image recording method, an image recorded material in which a rectangular solid image of 100 mm × 30 mm was recorded on the base material at a recording duty of 100% was obtained. The obtained image recorded material was allowed to stand in an environment of 25°C and a relative humidity of 50% for 24 hours.

A cotton cloth (Kanakin No. 3) was placed on the image recorded surface of the image recorded material after being left to stand, and the image recorded material was rubbed 100 times with a load of 200 g using a JSPS-type friction tester (manufactured by TESTER SANGYO CO., LTD.). The image recording surface after the rubbing was visually observed, and a peeling state of the rub mark in the image was confirmed. The evaluation standard was as follows. Evaluations 3, 4, and 5 are levels which do not cause any problems in practical use.

5: no rub mark was found on the image.

4: rub mark was found on the image, but the rub mark did not reach the base material.

3: rub mark was left on the image and a part of the rub mark reached the base material, but the area of the base material which was visible was more than 0% and less than 5% of the area (30 $cm^2$) of the image at the beginning of the recording.

2: rub mark was left on the image and a part of the rub mark reached the base material, and the area of the base material which was visible was 5% or more and less than 50% of the area (30 $cm^2$) of the image at the beginning of the recording.

1: rub mark was left on the image and a part of the rub mark reached the base material, and the area of the base material which was visible was 50% or more of the area (30 $cm^2$) of the image at the beginning of the recording.

<Stretchability>

By the above-described image recording method, an image recorded material in which a rectangular solid image of 100 mm × 30 mm was recorded on the base material at a recording duty of 100% was obtained. The obtained image recorded material was allowed to stand in an environment of 25°C and a relative humidity of 50% for 24 hours.

An image density of the image recorded material after being left to stand (that is, the image recorded material before stretching) was measured using a fluorescence spectrophotometer (product name "FD-7", manufactured by Konica Minolta, Inc.).

The image recorded material after being left to stand was set using a tensile tester (product name "AUTOGRAPH AG-IS 5 kN type", manufactured by Shimadzu Corporation) such that a distance between grips was 5 cm, and the image recorded material was stretched until the distance between the grips was 13 cm under the condition of a stretching speed of 300 mm/min.

An image density of the image recorded material after the stretching was measured in the same manner as the image density of the image recorded material before stretching. In addition, the image recorded material after the stretching was visually observed to check the presence or absence of breakage. The stretchability was evaluated based on the amount of change between the image density of the image recorded material after the stretching and the image density of the image recorded material before the stretching, and the presence or absence of breakage. The evaluation standard was as follows. Evaluations 3, 4, and 5 are levels which do not cause any problems in practical use.

Amount of change in image density before and after stretching = Image density of image recorded material before stretching - Image density of image recorded material after stretching

5: no image breakage was observed after the stretching, and the amount of change in image density before and after the stretching was less than 0.5.

4: no image breakage was observed after the stretching, and the amount of change in image density before and after the stretching was 0.5 or more and less than 0.8.

3: no image breakage was observed after the stretching, and the amount of change in image density before and after the stretching was 0.8 or more and less than 1.1.

2: no image breakage was observed after the stretching, but the amount of change in image density before and after the stretching was 1.1 or more.

1: image breakage was observed after the stretching.

<Jettability>

The above-described ink, which had been stored at room temperature for 1 day or less after the preparation, was jetted from the ink jet head of the above-described ink jet recording apparatus for 30 minutes, and then the jetting was stopped.

After 5 minutes from the stop of the jetting, the above-described ink was jetted again from the above-described ink jet head onto the base material, and a solid image of 5 cm × 5 cm was recorded.

The obtained image was visually observed to confirm whether dots were missed due to the occurrence of a non-jetting nozzle or the like, and jettability of the ink was evaluated according to the following evaluation standard. The evaluation standard was as follows. Evaluations A and B are levels which do not cause any problems in practical use.

A: dot missing due to the occurrence of a non-jetting nozzle or the like was not confirmed, and a favorable image was obtained.
B: although the occurrence of a non-jetting nozzle or the like was slightly confirmed, the level was not a problem in practical use.
C: dot missing due to the occurrence of a non-jetting nozzle or the like was confirmed, and the image was not able to be used in practice.

The evaluation results are shown in Tables 1 and 2. In Tables 1 and 2, the distance X1 indicates the distance along the transport direction between the end part of the nozzle 70 on the downstream side in the transport direction and the end part of the light sources 34A and 34B on the upstream side in the transport direction, as shown in Fig. 6. "Polymerizable compound A/(polymer P + polymerizable compound A)" indicates the mass ratio of the content of the polymerizable compound A to the total content of the polymer P and the polymerizable compound A. "Residual proportion of water" indicates the proportion of the content of water immediately before the timing of the irradiation with an active energy ray to the content of water immediately before the timing when the ink has landed on the base material. "Residual proportion of organic solvent" indicates the proportion of the content of the organic solvent immediately before the timing of the irradiation with an active energy ray to the content of the organic solvent immediately before the timing when the ink has landed on the base material. The methods of calculating the residual proportion of water and the residual proportion of the organic solvent are as described above.

[Table 1]

| | | Example 1 | Example 2 | Example 3 | Example 4 | Example 5 | Example 6 | Example 7 | Example 8 |
|---|---|---|---|---|---|---|---|---|---|
| Polymer P | | 5.0 | 5.0 | 5.0 | 5.0 | 5.0 | 7.0 | 3.0 | 8.0 |
| Polymerizable compound A | | 5.0 | 5.0 | 5.0 | 5.0 | 5.0 | 3.0 | 7.0 | 2.0 |
| Polymerization initiator | | 0.8 | 0.8 | 0.8 | 0.8 | 0.8 | 0.8 | 0.8 | 0.8 |
| Sensitizer | | 0.2 | 0.2 | 0.2 | 0.2 | 0.2 | 0.2 | 0.2 | 0.2 |
| Surfactant | | 0.5 | 0.5 | 0.5 | 0.5 | 0.5 | 0.5 | 0.5 | 0.5 |
| Organic solvent | | - | - | - | - | 10.0 | 10.0 | 10.0 | 10.0 |
| Pigment dispersing agent | | 1.2 | 1.2 | 1.2 | 1.2 | 1.2 | 1.2 | 1.2 | 1.2 |
| Pigment | | 3.0 | 3.0 | 3.0 | 3.0 | 3.0 | 3.0 | 3.0 | 3.0 |
| Water | | Remaining amount | Remaining amount | Remaining amount | Remaining amount | Remaining amount | Remaining amount | Remaining amount | Remaining amount |
| Polymerizable compound A/(polymer P + polymerizable compound A) | | 0.5 | 0.5 | 0.5 | 0.5 | 0.5 | 0.3 | 0.7 | 0.2 |
| Distance X1 (mm) | | 60 | 60 | 60 | 60 | 60 | 60 | 60 | 60 |
| Heating temperature ( ° C) | | 30 | 65 | 45 | 45 | 45 | 45 | 45 | 45 |
| Presence or absence of blower | | N | N | N | Y | Y | Y | Y | Y |
| Residual proportion of water (% by mass) | | 20 | 10 | 15 | 2 | < 1 | < 1 | < 1 | < 1 |
| Residual proportion of organic solvent (% by mass) | | - | - | - | - | 35 | 35 | 35 | 35 |
| Evaluation | Image quality | C | C | C | B | A | A | A | B |
| | Rub resistance | 3 | 4 | 3 | 4 | 5 | 5 | 5 | 4 |
| | Stretchability | 3 | 4 | 4 | 4 | 5 | 5 | 5 | 4 |
| | Jettability | A | B | A | A | A | A | A | A |

[Table 2]

| | | Example 9 | Example 10 | Example 11 | Example 12 | Example 13 | Example 14 | Example 15 | Comparative Example 1 | Comparative Example 2 |
|---|---|---|---|---|---|---|---|---|---|---|
| Polymer P | | 2.0 | 3.0 | 3.0 | 5.0 | 5.0 | 5.0 | 5.0 | 5.0 | 5.0 |
| Polymerizable compound A | | 8.0 | 7.0 | 7.0 | 5.0 | 5.0 | 5.0 | 5.0 | 5.0 | 5.0 |
| Polymerization initiator | | 0.8 | 0.8 | 0.8 | 0.8 | 0.8 | 0.8 | 0.8 | 0.8 | 0.8 |
| Sensitizer | | 0.2 | 0.2 | 0.2 | 0.2 | 0.2 | 0.2 | 0.2 | 0.2 | 0.2 |
| Surfactant | | 0.5 | 0.5 | 0.5 | 0.5 | 0.5 | 0.5 | 0.5 | 0.5 | 0.5 |
| Organic solvent | | 10.0 | 10.0 | 10.0 | 10.0 | 10.0 | 10.0 | 10.0 | 10.0 | 10.0 |
| Pigment dispersing agent | | 1.2 | 1.2 | 1.2 | 1.2 | 1.2 | 1.2 | 1.2 | 1.2 | 1.2 |
| Pigment | | 3.0 | 3.0 | 3.0 | 3.0 | 3.0 | 3.0 | 3.0 | 3.0 | 3.0 |
| Water | | Remaining amount | Remaining amount | Remaining amount | Remaining amount | Remaining amount | Remaining amount | Remaining amount | Remaining amount | Remaining amount |
| Polymerizable compound A/(polymer P + polymerizable compound A) | | 0.8 | 0.7 | 0.7 | 0.5 | 0.5 | 0.5 | 0.5 | 0.5 | 0.5 |
| Distance X1 (mm) | | 60 | 60 | 60 | 10 | 40 | 100 | 180 | 5 | 250 |
| Heating temperature ( ° C) | | 45 | 65 | 30 | 45 | 45 | 45 | 45 | 45 | 45 |
| Presence or absence of blower | | Y | Y | Y | Y | Y | Y | Y | Y | Y |
| Residual proportion of water (% by mass) | | < 1 | < 1 | 10 | < 1 | < 1 | < 1 | < 1 | 50 | < 1 |
| Residual proportion of organic solvent (% by mass) | | 35 | 15 | 50 | 35 | 35 | 35 | 30 | 60 | 15 |
| Evaluation | Image quality | A | B | B | A | A | A | A | D | A |
| | Rub resistance | 5 | 4 | 4 | 4 | 5 | 5 | 4 | 2 | 2 |
| | Stretchability | 5 | 4 | 4 | 4 | 5 | 5 | 5 | 1 | 1 |
| | Jettability | B | B | A | A | A | A | A | A | A |

As shown in Tables 1 and 2, in Examples 1 to 15, it was found that, since the distance X1 in the ink jet recording apparatus was 10 mm to 200 mm, the image quality, rub resistance, and stretchability of the obtained image were excellent.

On the other hand, in Comparative Example 1, it was found that the image quality, rub resistance, and stretchability were deteriorated because the distance X1 was less than 10 mm.

In Comparative Example 2, it was found that the rub resistance and stretchability were deteriorated because the distance X1 was more than 200 mm.

In Example 5 and Example 13, it was found that the distance X1 was 40 mm to 150 mm, and thus the rub resistance and stretchability were excellent as compared with Example 12.

In Example 7, it was found that the heating temperature was 35°C to 60°C, and thus the image quality, rub resistance, and stretchability were excellent as compared with Examples 10 and 11.

The disclosure of Japanese Patent Application No. 2022-175010 filed on October 31, 2022 is incorporated in the present specification by reference. In addition, all documents, patent applications, and technical standards described in the present specification are incorporated herein by reference to the same extent as in a case of being specifically and individually noted that individual documents, patent applications, and technical standards are incorporated by reference.

## Claims

**1.** An ink jet recording apparatus comprising:

an ink jet head having a nozzle for jetting, onto a base material, an ink that contains water and particles which contain a polymer P having an acid group and a polymerizable compound A;
a scanning unit which is configured to cause the ink jet head to perform scanning in a scanning direction;
a transport unit which is configured to transport the base material in a transport direction intersecting the scanning direction;
a heating unit which is configured to heat a surface of the base material opposite to a surface on which the ink is to be landed; and
a light source which is configured to, after the ink jetted from the nozzle is landed on the base material, irradiate the surface of the base material on which the ink is landed with an active energy ray,
wherein a distance along the transport direction between an end part of the nozzle on a downstream side in the transport direction and an end part of the light source on an upstream side in the transport direction is 10 mm to 200 mm.

**2.** The ink jet recording apparatus according to claim 1,
wherein the distance is 40 mm to 150 mm.

**3.** The ink jet recording apparatus according to claim 1,
wherein the heating unit performs heating at a temperature of 35°C to 60°C.

**4.** The ink jet recording apparatus according to claim 1, further comprising:
a blower which is configured to blow a gas to the surface of the base material on which the ink is landed.

**5.** An ink jet recording method using the ink jet recording apparatus according to any one of claims 1 to 4 and the ink, the ink jet recording method comprising:

a step of heating a surface of the base material opposite to a surface on which the ink is to be landed;
a step of jetting the ink onto the base material; and
a step of irradiating the surface of the base material on which the ink is landed with an active energy ray.

**6.** The ink jet recording method according to claim 5,

wherein the ink further contains an organic solvent,
a content of water in the ink which has landed on the base material immediately before a timing of the irradiation with an active energy ray is 5% by mass or less with respect to a content of water immediately before a timing when the ink has landed on the base material, and
a content of the organic solvent in the ink which has landed on the base material immediately before the timing of the irradiation with an active energy ray is 30% by mass or more with respect to a content of the organic solvent

immediately before the timing when the ink has landed on the base material.

**7.** The ink jet recording method according to claim 5,
wherein a mass ratio of a content of the polymerizable compound A to a total content of the polymer P having an acid group and the polymerizable compound A is 0.3 to 0.7.

FIG. 1

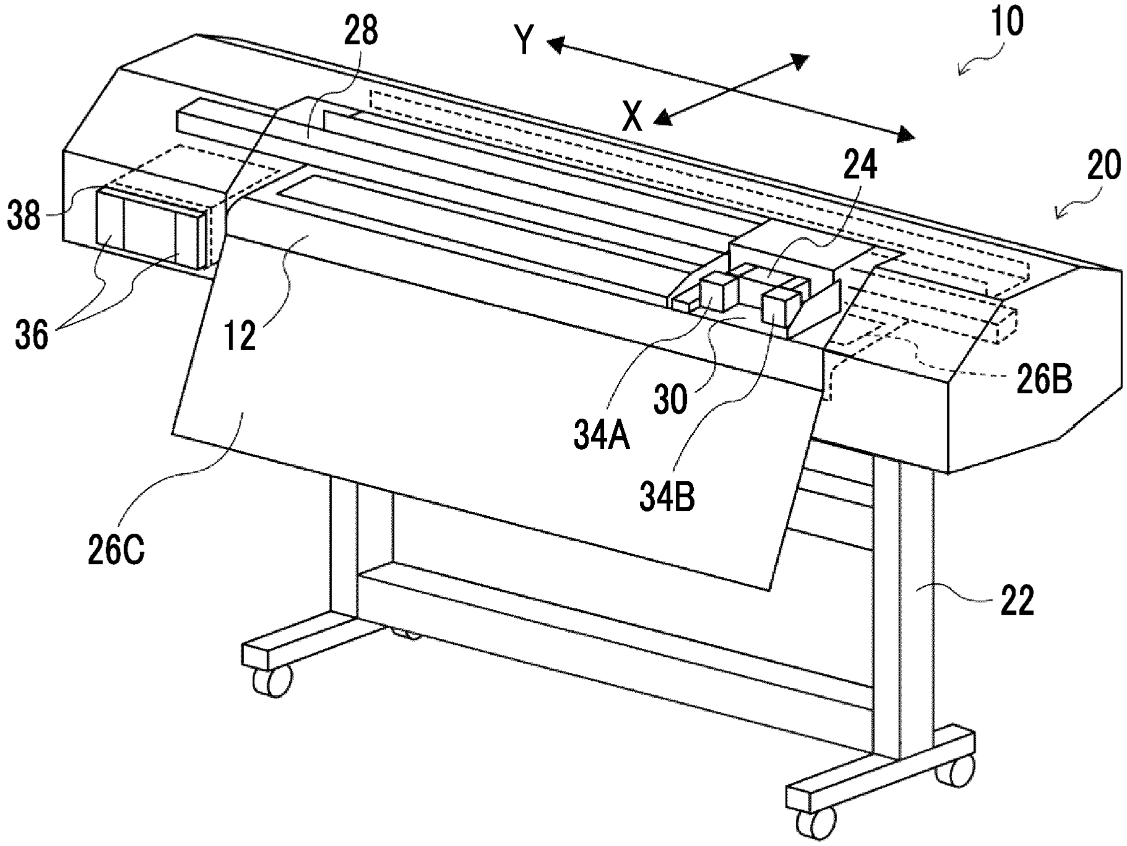
28
Y
X
10
24
20
38
36
12
30
26B
34A
34B
26C
22

FIG. 2A

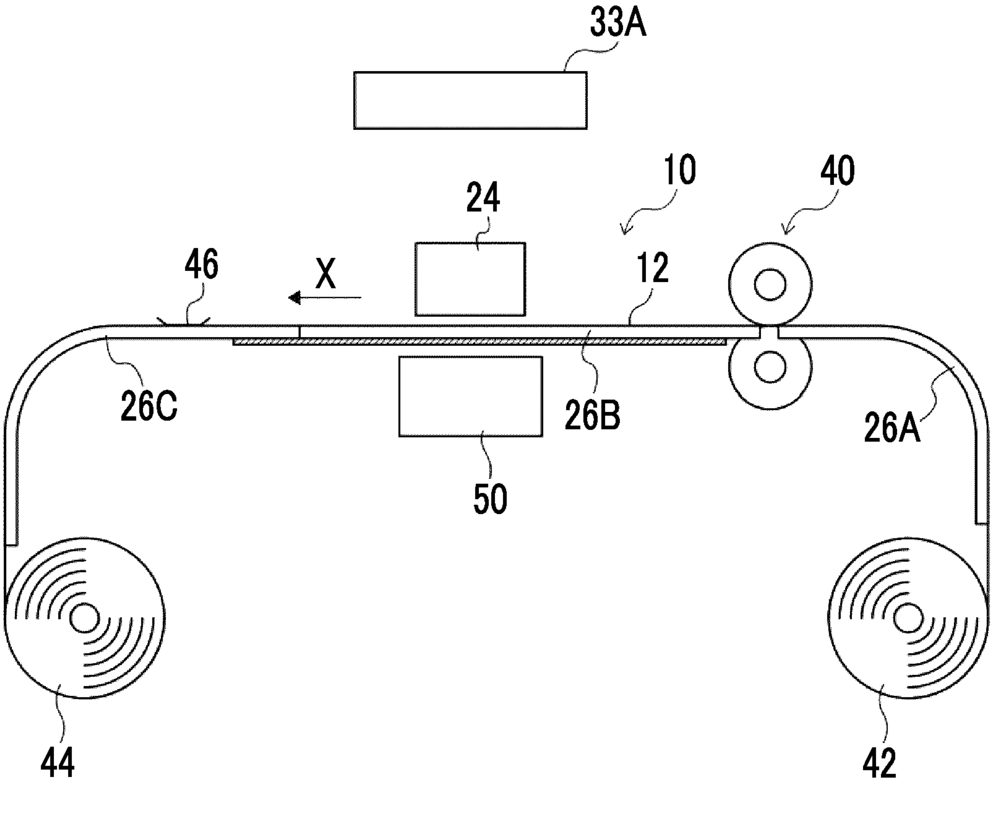
33A
10
40
24
46
X
12
26C
26B
26A
50
44
42

FIG. 2B

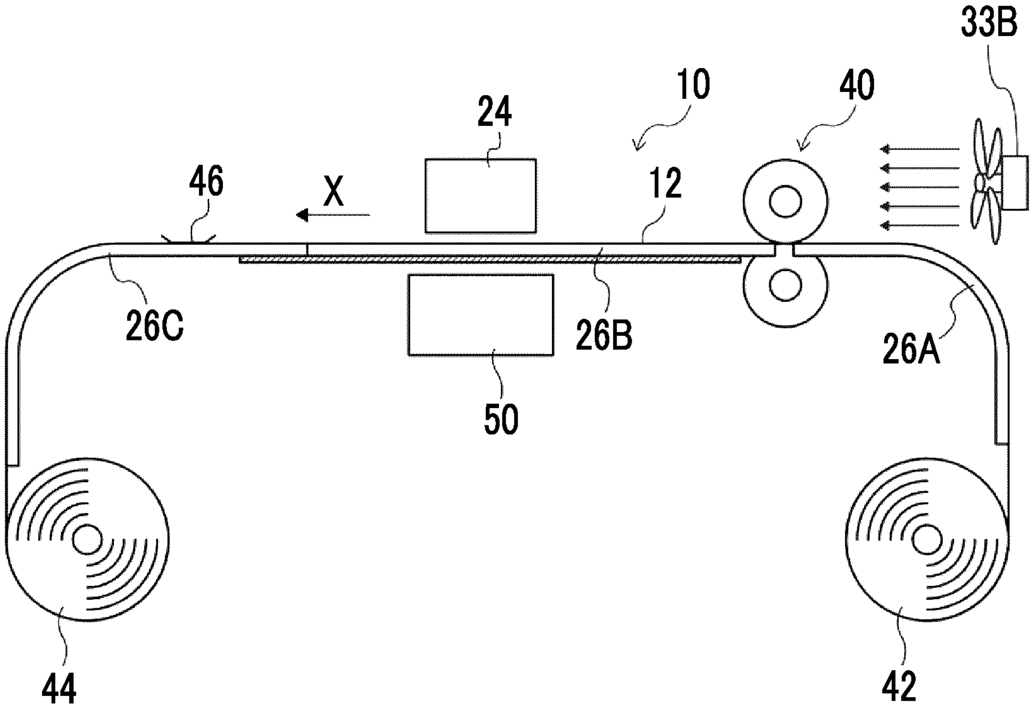
33B
10
40
24
46
X
12
26C
26B
26A
50
44
42

FIG. 2C

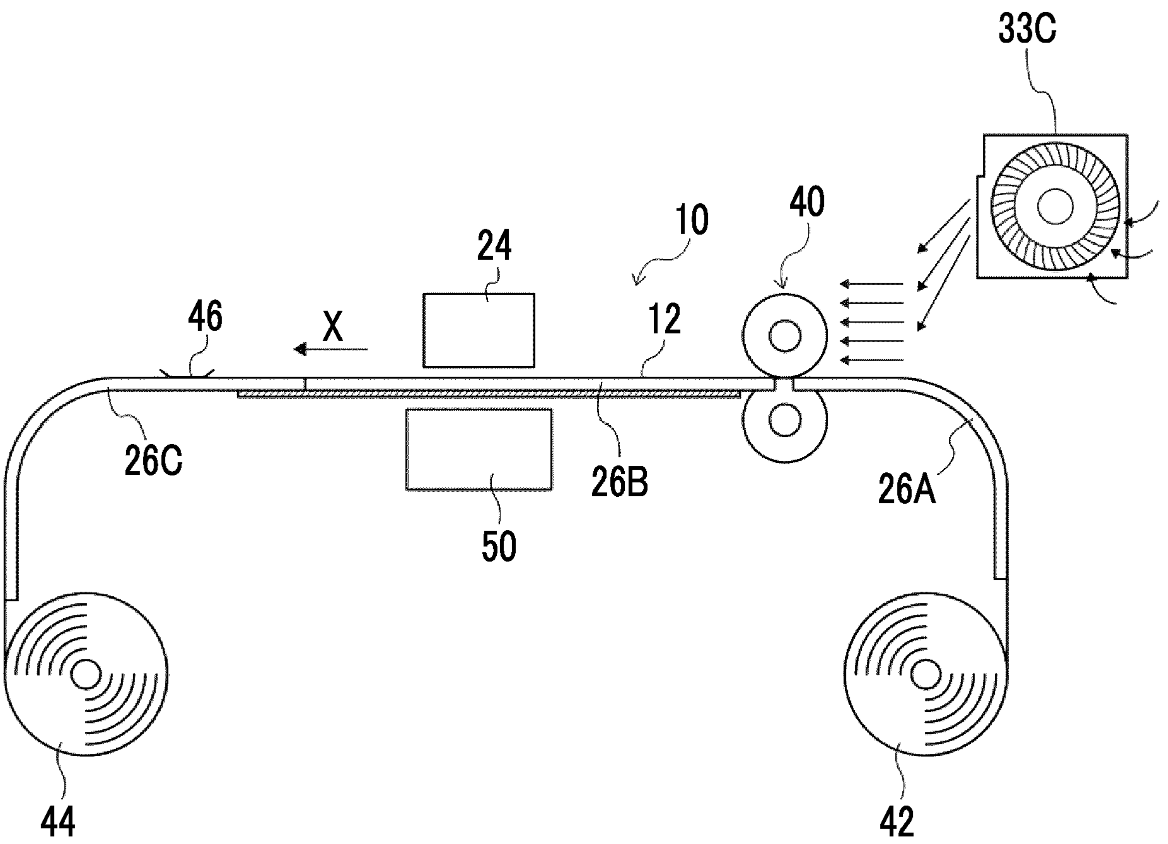
33C
10
40
24
46
X
12
26C
26B
26A
50
44
42

FIG. 3A

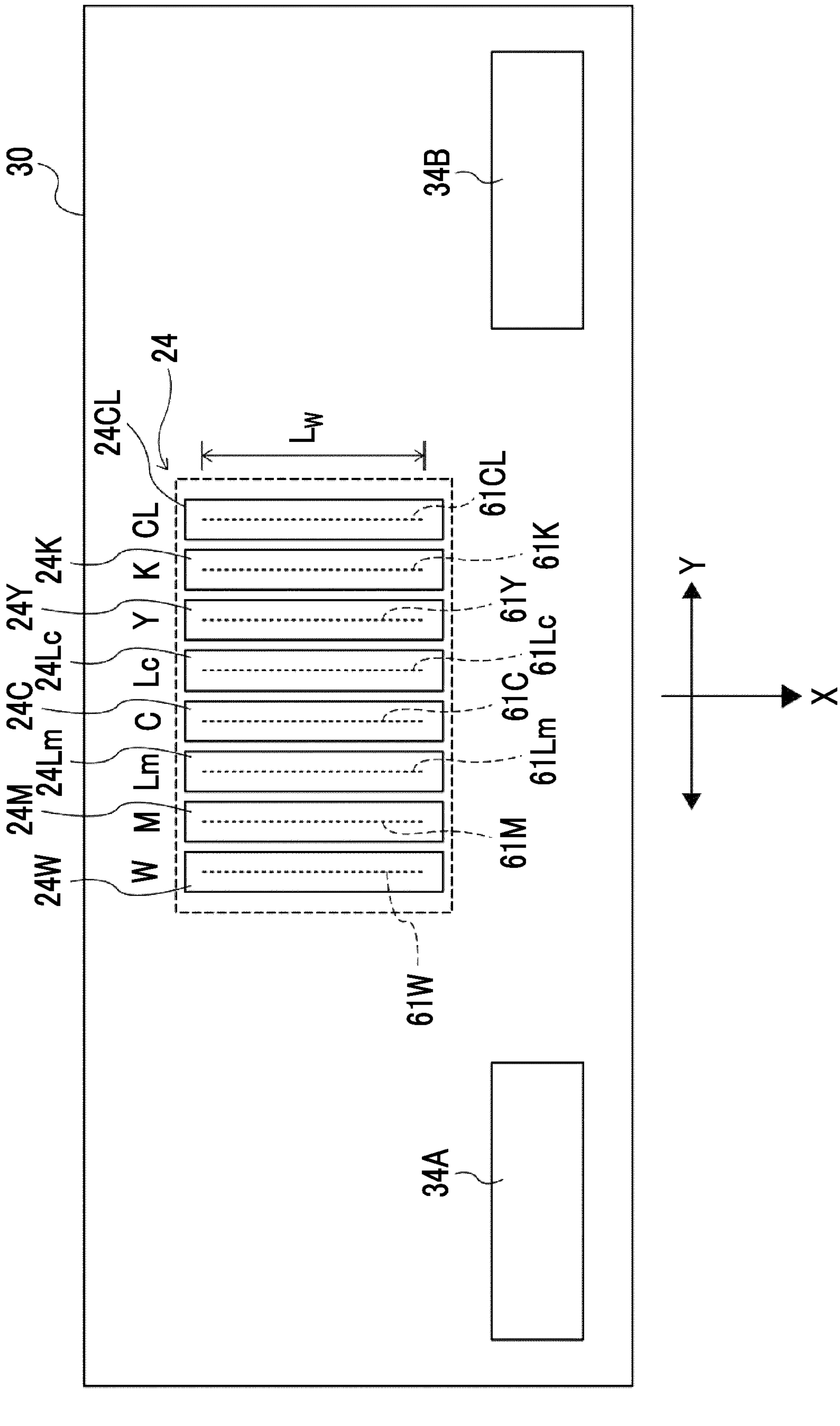
30
34B
24
24CL
$L_W$
61CL
CL
K
Y
Lc
C
Lm
M
W
24K
24Y
24Lc
24C
24Lm
24M
24W
61K
61Y
61Lc
61C
61Lm
61M
61W
Y
X
34A

FIG. 3B

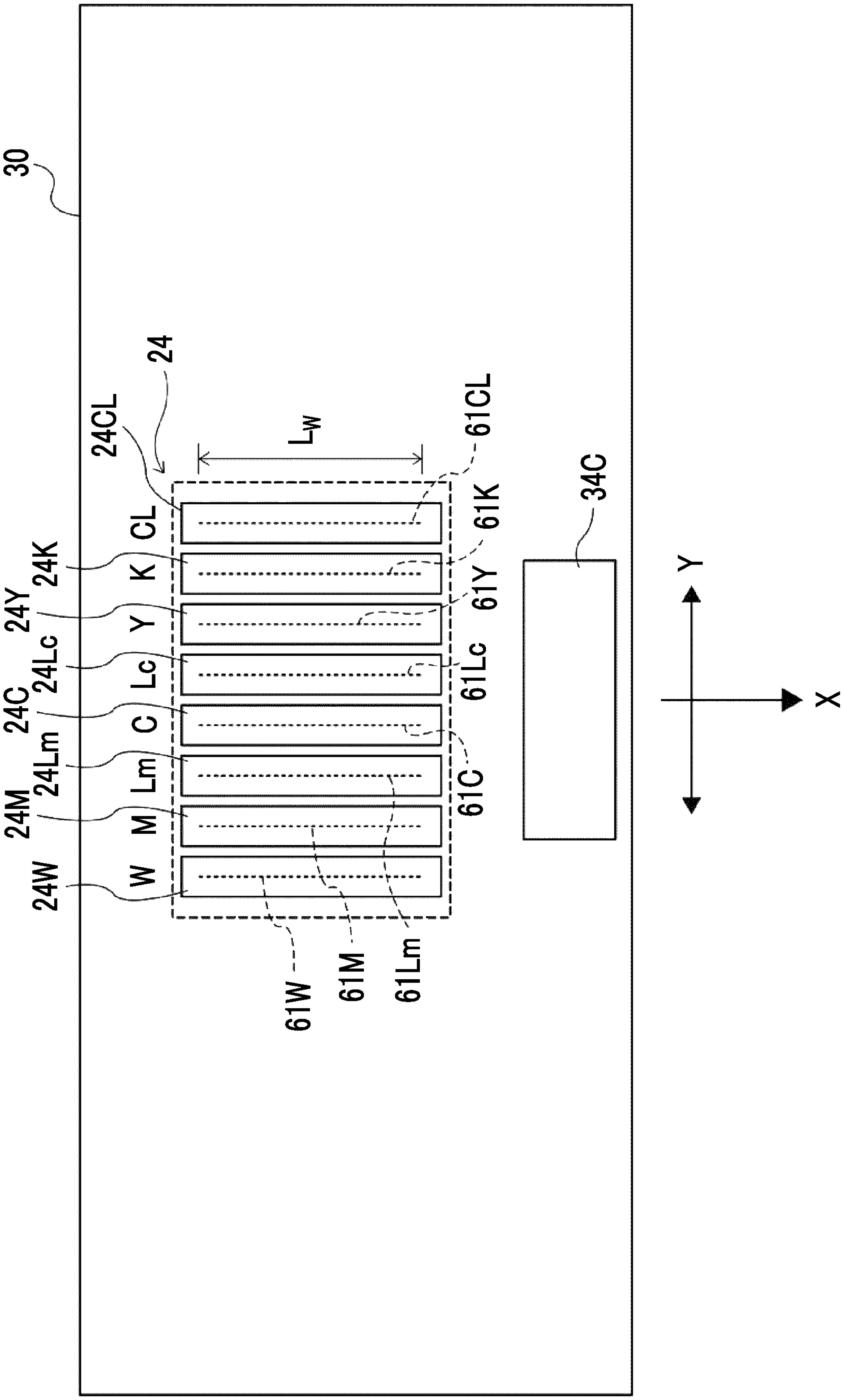
30
24
24CL
24K
24Y
24Lc
24C
24Lm
24M
24W
CL
K
Y
Lc
C
Lm
M
W
$L_W$
61CL
61K
61Y
61Lc
61C
61W
61M
61Lm
34C
Y
X

FIG. 4A

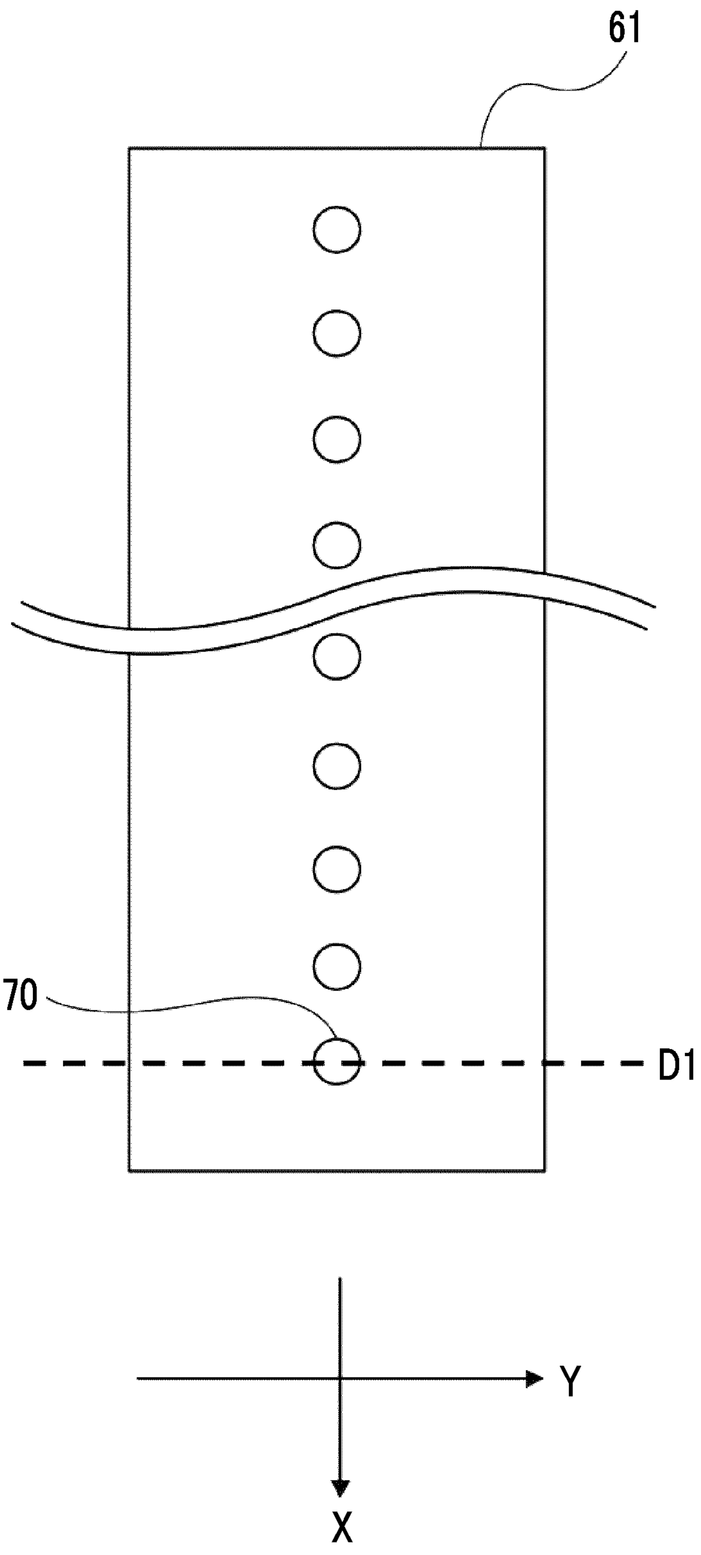

FIG. 4B

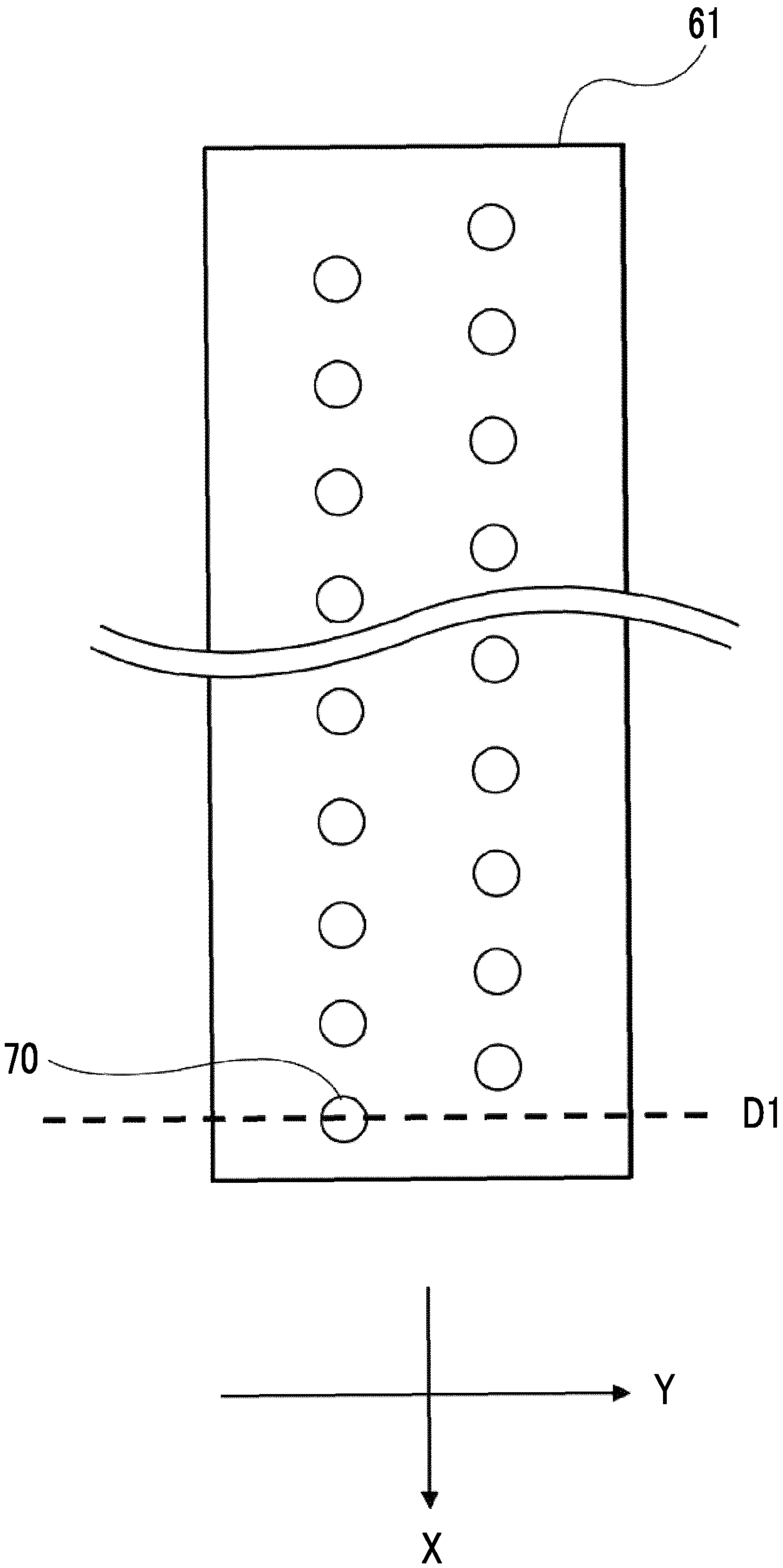

FIG. 5

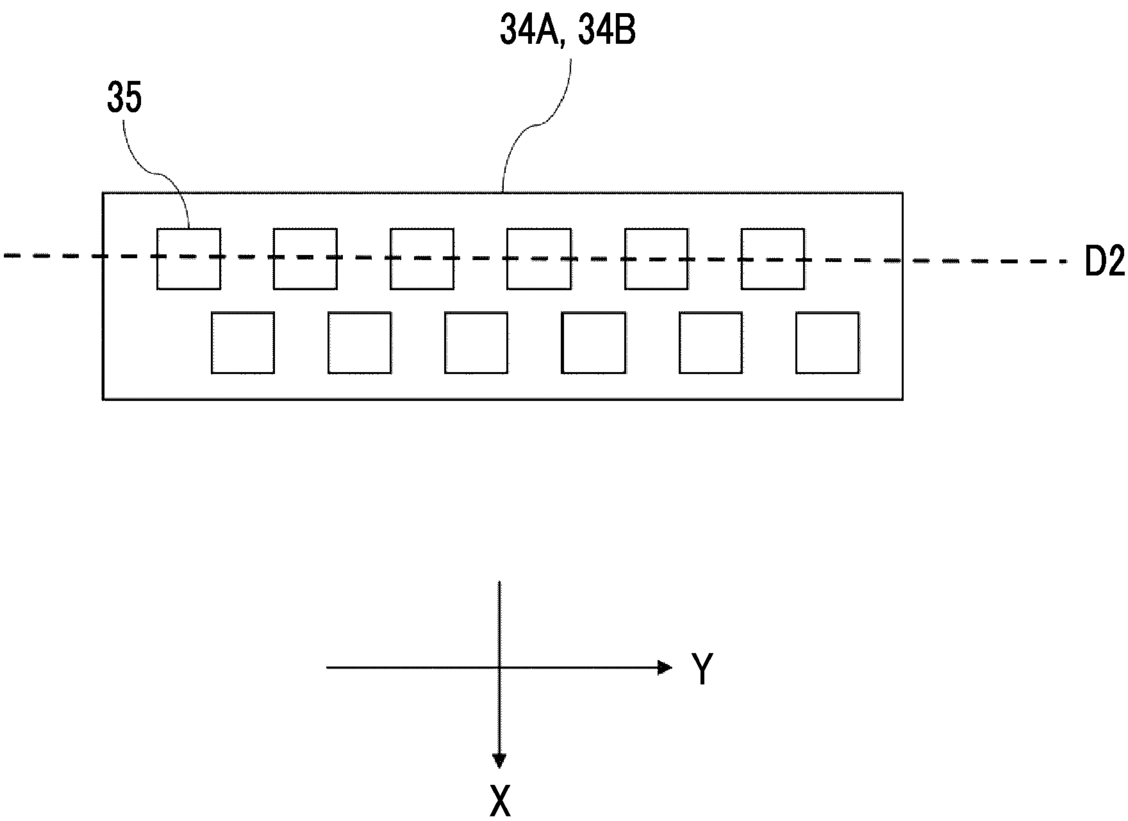

FIG. 6

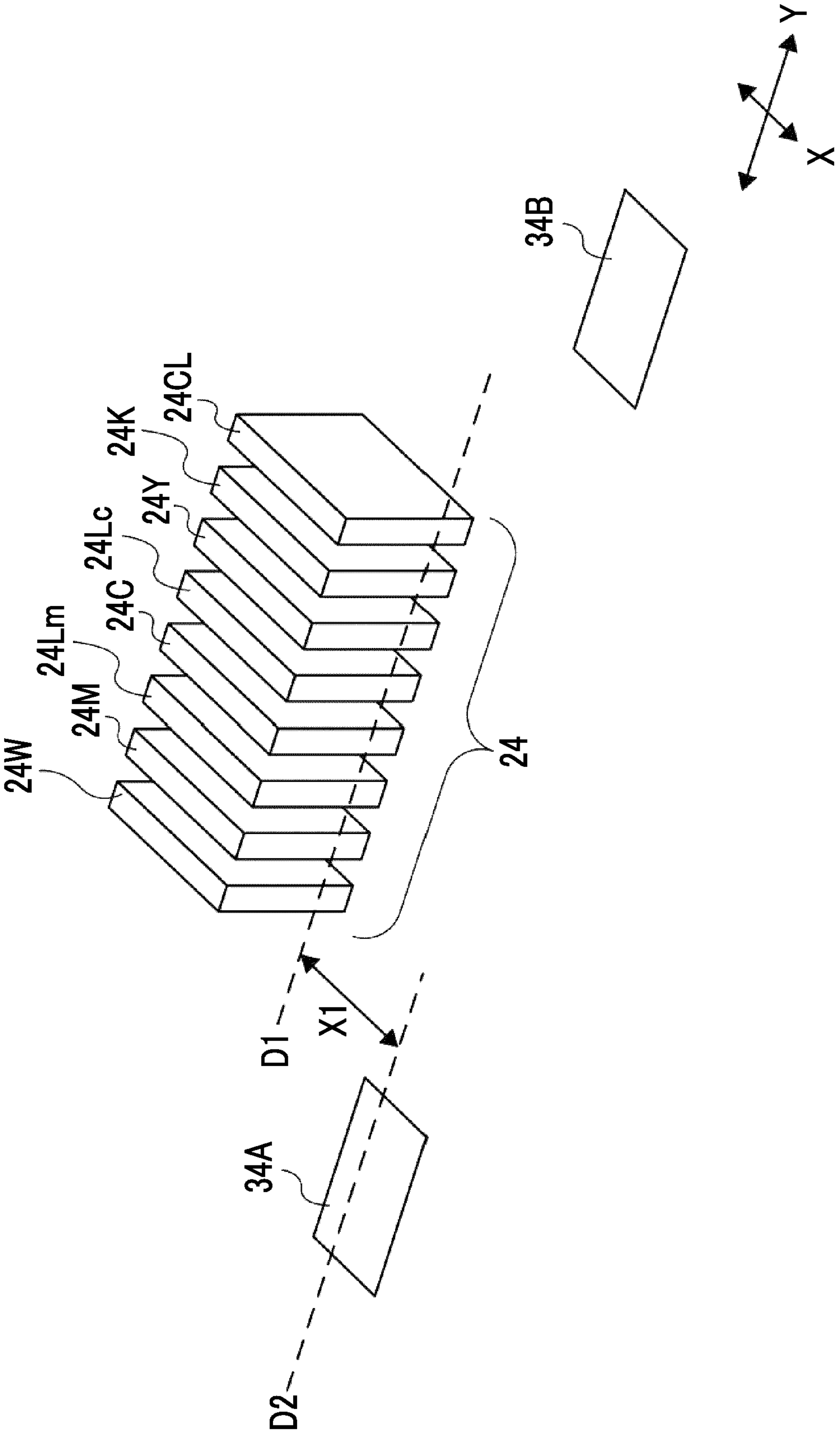

FIG. 7

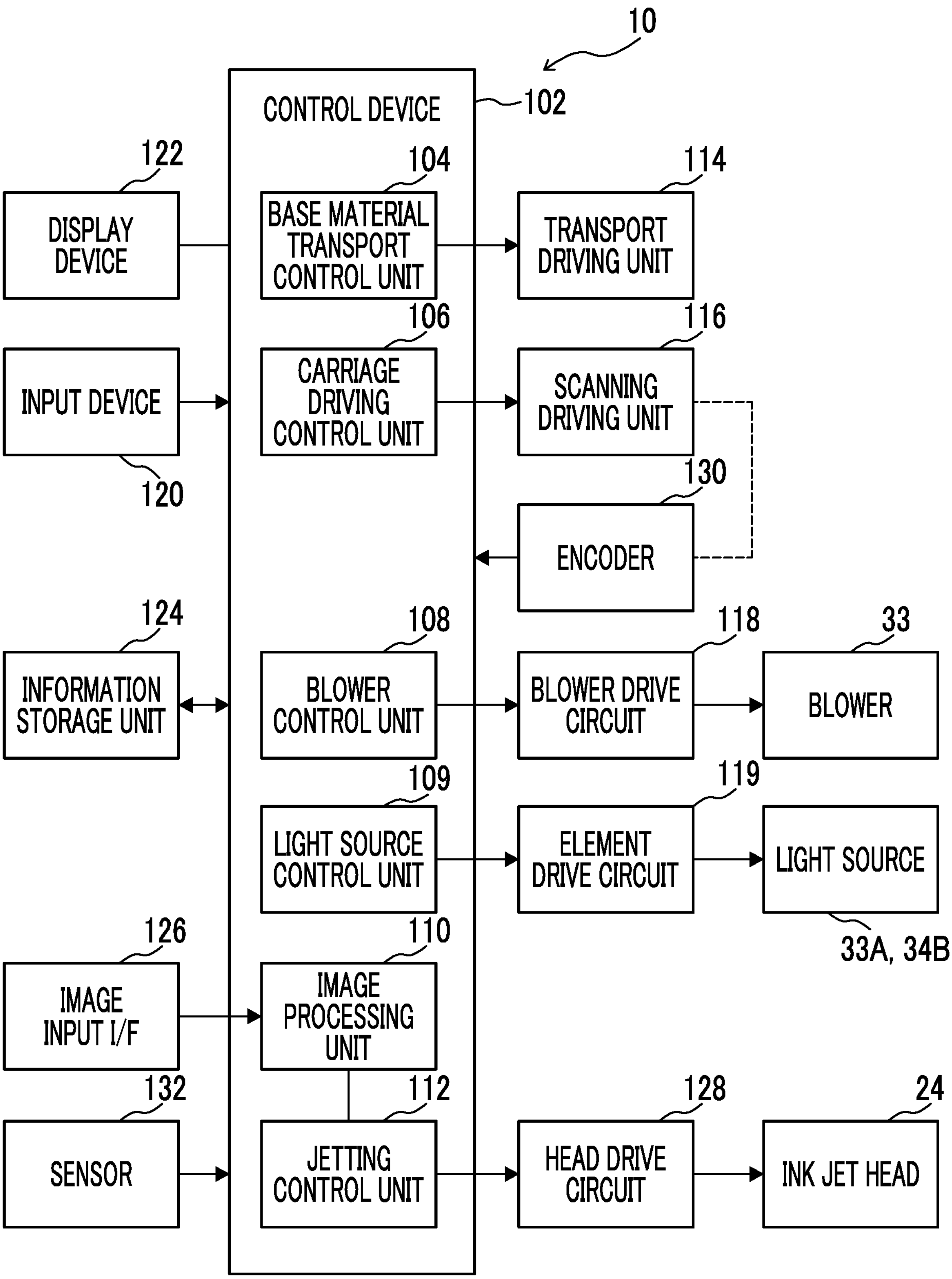
10
CONTROL DEVICE
102
104
BASE MATERIAL TRANSPORT CONTROL UNIT
106
CARRIAGE DRIVING CONTROL UNIT
108
BLOWER CONTROL UNIT
109
LIGHT SOURCE CONTROL UNIT
110
IMAGE PROCESSING UNIT
112
JETTING CONTROL UNIT
122
DISPLAY DEVICE
INPUT DEVICE
120
124
INFORMATION STORAGE UNIT
126
IMAGE INPUT I/F
132
SENSOR
114
TRANSPORT DRIVING UNIT
116
SCANNING DRIVING UNIT
130
ENCODER
118
BLOWER DRIVE CIRCUIT
33
BLOWER
119
ELEMENT DRIVE CIRCUIT
LIGHT SOURCE
33A, 34B
128
HEAD DRIVE CIRCUIT
24
INK JET HEAD

FIG. 8

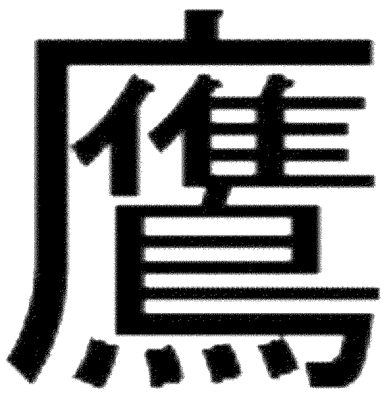

## INTERNATIONAL SEARCH REPORT

International application No.
**PCT/JP2023/035959**

### A. CLASSIFICATION OF SUBJECT MATTER

***B41J 2/01***(2006.01)i; ***B41M 5/00***(2006.01)i; ***C09D 11/30***(2014.01)i
FI: B41J2/01 129; B41J2/01 121; B41J2/01 125; B41J2/01 501; B41M5/00 100; B41M5/00 120; C09D11/30

According to International Patent Classification (IPC) or to both national classification and IPC

### B. FIELDS SEARCHED

Minimum documentation searched (classification system followed by classification symbols)

B41J2/01-2/215; B41M5/00; C09D11/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2013-202928 A (SEIKO EPSON CORP) 07 October 2013 (2013-10-07) paragraphs [0052]-[0257], fig. 3 | 1-5, 7<br>6 |
| Y | JP 6584677 B2 (FUJIFILM CORP) 02 October 2019 (2019-10-02) paragraphs [0098]-[0135] | 1-5, 7 |
| Y | JP 2015-044345 A (FUJIFILM CORP) 12 March 2015 (2015-03-12) paragraph [0074] | 4-5, 7 |
| A | JP 2013-078862 A (FUJIFILM CORP) 02 May 2013 (2013-05-02) entire text, all drawings | 1-7 |
| A | JP 2020-032659 A (SEIKO EPSON CORP) 05 March 2020 (2020-03-05) entire text, all drawings | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 October 2023** | **31 October 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

**INTERNATIONAL SEARCH REPORT**
**Information on patent family members**

International application No.
**PCT/JP2023/035959**

| Patent document cited in search report | Publication date (day/month/year) | Patent family member(s) | Publication date (day/month/year) |
|---|---|---|---|
| JP 2013-202928 A | 07 October 2013 | US 2013/0258017 A1<br>paragraphs [0073]-[0327], fig. 3 | |
| JP 6584677 B2 | 02 October 2019 | US 2019/0169453 A1<br>paragraphs [0201]-[0283]<br>EP 3508538 A1<br>CN 109661440 A | |
| JP 2015-044345 A | 12 March 2015 | (Family: none) | |
| JP 2013-078862 A | 02 May 2013 | (Family: none) | |
| JP 2020-032659 A | 05 March 2020 | US 2020/0070545 A1<br>entire text, all drawings<br>CN 110871639 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6584677 B
- JP 2013078862 A
- JP 2009058750 A
- JP 7159983 A
- JP H07159983 A
- JP 7031399 A
- JP H0731399 A
- JP 8224982 A
- JP H08224982 A
- JP 10000863 A
- JP H10863 A
- JP 9134011 A
- JP H09134011 A
- JP 2004514014 A
- JP 6510681 B
- WO 2016052053 A
- JP 2010024276 A
- JP 6107718 A
- JP H6107718 A
- JP 2014040529 A
- JP 2022175010 A